# EUROPEAN PATENT APPLICATION

(11) **EP 2 631 872 A1**
(43) Date of publication of application: **28.08.2013**
(21) Application number: 11834034.8
(22) Date of filing: 18.10.2011
(51) Int. Cl.: G06T 7/00, G06F 17/30

(54) **FEATURE EXTRACTION DEVICE, FEATURE EXTRACTION METHOD AND PROGRAM FOR SAME**

(30) Priority: 18.10.2010 JP 2010234064
(71) Applicant: Osaka University, Suita-shi, Osaka 565-0871 (JP)
(72) Inventor: YAGI, Takeshi, Suita-shi Osaka 565-0871 (JP); KITSUKAWA, Takashi, Suita-shi Osaka 565-0871 (JP)
(74) Representative: Vigand, Philippe
(86) International application number: PCT/JP2011/005807
(87) International publication number: WO 2012/053188

(57) **Abstract**

Aiming at providing a feature extraction device capable of extracting features of recognition targets without prior learning, a feature extraction device (100) according to the present invention includes a neural network including neurons (301, 302, 303, 311, 312, and 313) each including at least one expressed gene which is an attribute value for determining whether transmission of a signal from one of the first neurons (301, 302, and 303) to one of the second neurons (311, 312, and 313) is possible, each first neuron having input data resulting from target data to be subjected to feature extraction outputs a first signal value to corresponding second neuron(s) having the same expressed gene as the one in the first neuron, the first signal value increasing as a value of the input data increases, and each second neuron calculates, as a feature quantity of the target data, a second signal value corresponding to a total sum of the first signal values input thereto.

## Description

### [Technical Field]

The present invention relates to feature extraction devices etc., and particularly to a feature extraction device, a feature extraction method, and a program for the same.

### [Background Art]

Neural networks (for example, see Patent Literature 1) have been known as information processing schemes for allowing computers to model functions (neural flexibility) of neurons (neural cells) present in brains in order to achieve aimed information processing.

A principal application of such a neural network is pattern recognition. For example, such a neural network is intended to allow a computer to select, from data of images, data of an image that includes a given person's face or data of an image that does not include the given person's face.

In order to allow the computer to perform the pattern recognition processing, it is necessary to successfully extract feature quantities sufficiently representing features of recognition targets from measurement data of the recognition targets.

In general, such a neural network makes it possible to non-linearly connect neurons that compose the network, and thus approximate complicated features using non-linear functions and achieve excellent recognition results.

### [Citation List]

### [Patent Literature]

### [PTL 1]

Japanese Patent No. 4478296

### [Summary of Invention]

### [Technical Problem]

However, in general, a preparation work called "learning" is essential for achieving a neural network capable of successfully extracting features of target data. Here, learning is a work for adjusting parameters in the neural network using learning data with known answers (which are pieces of attribute information desired to be recognized, such as a person's name, good or bad, etc.).

Such learning for the neural network requires a large amount of learning data prepared in advance.

However, in most cases of testing devices for distinguishing good products and bad products of industrial products using image recognition, no sufficient amount of learning data (especially data of bad products) has been prepared yet because, for example, the industrial products are new products or the manufacturing line therefor have just been started. For this reason, it is impossible to prepare necessary learning data and to thereby prepare a neural network capable of providing sufficient recognition performances.

The present invention was made with an aim to provide a feature extraction device capable of extracting features of recognition targets without requiring prior learning.

### [Solution to Problem]

A feature extraction device according to an aspect of the present invention includes a neural network, wherein the neural network includes a plurality of neurons which are calculation units, each of the plurality of neurons includes at least one expressed gene which is an attribute value for determining whether or not transmission of a signal from one of the neurons to an other one of the neurons is possible, among the plurality of neurons, each of one or more first neurons which has input data obtained by dividing target data to be subjected to feature extraction outputs a first signal value to a second neuron which has the same expressed gene as the expressed gene included in the first neuron, the first signal value increasing as a value of the input data increases, and the second neuron calculates, as a feature quantity of the target data, a second signal value corresponding to a total sum of the one or more first signal values input to the second neuron.

With this structure, the expressed gene determines a signal path for the signal to be transmitted from each of the first neurons to the second neuron. In addition, when the signal path is determined, the second neuron can output the feature quantity of the target data according to the total value of the inputs obtained from the first neurons. Thus, it is possible to realize the feature extraction device capable of extracting features of recognition targets without requiring prior learning.

More specifically, the neural network may be a hierarchical neural network including a plurality of layers, the hierarchical neural network may include, as the plurality of neurons, a plurality of first layer neurons which are calculation units in a first layer and a second layer neuron which is a calculation unit in a second layer, each of the first layer neurons and the second layer neuron may include at least one expressed gene which is an attribute value for determining whether or not the transmission of the signal from the first layer neuron to the second layer neuron is possible, each of the plurality of first layer neurons which has the input data obtained by dividing the target data may output the first signal value to the second layer neuron which has the same expressed gene as the expressed gene included in the first layer neuron, the first signal value increasing as the value of the input data increases, and the second layer neuron may calculate, as the feature quantity of the target data, the second signal value corresponding to the total sum of the one or more first signal values input to the second layer neuron.

With this structure, the expressed gene determines a signal path for the signal to be transmitted from the first neuron to the second neuron. In addition, when the signal path is determined, each of the second layer neurons can output the feature quantity of the target data. Thus, it is possible to realize the feature extraction device capable of extracting feature quantities of recognition targets without requiring learning processes using teacher signals which are generally essential in conventional hierarchical neural networks.

In addition, the feature extraction device may further include an expressed gene assignment unit configured, for each of the plurality of first layer neurons and the second layer neuron: (i) to select at least one gene from a gene repertory including a plurality of genes each indicating a predetermined attribute value; and (ii) to assign the at least one selected gene as the expressed gene, wherein each of the plurality of first layer neurons may output the first signal value to the second layer neuron which has the same expressed gene as the expressed gene included in the first layer neuron.

More specifically, the expressed gene assignment unit may be configured to randomly select the at least one gene that should be assigned as the expressed gene from the gene repertory.

In this way, the expressed gene assignment unit can randomly assign the expressed gene to each neuron. By employing random assignment of expressed genes, it is possible to implement the feature extraction device which exerts stable feature extraction performances for various kinds of target data. Furthermore, since only the expressed genes form the signal paths for the signals, the feature extraction device can exert stable feature extraction performances.

In addition, the expressed gene assignment unit may be configured to select the at least one gene that should be assigned as the expressed gene from predetermined combinations included in the gene repertory.

In this way, it is possible to represent the target data using a combination (pattern) of predetermined expressed genes.

In addition, the second layer neuron may output a predetermined value as the second signal value when the total sum of the one or more first signal values input to the second layer neuron is included in a predetermined range, and output, as the second signal value, a value different from the predetermined value when the total sum of the one or more first signal values input to the second layer neuron is not included in the predetermined range.

In this way, it is possible to select a plan for the feature extraction device to extract a feature of target data as a criterion based on the total sum of the input values.

Preferably, the hierarchical neural network may include a plurality of the second layer neurons, the feature extraction device may further include a comparison unit configured to output an activation instruction to each of second layer neurons, among the plurality of second layer neurons, which has a rank within a predetermined range in descending order of total sums of first signal values, each total sum being of first signal values input to a corresponding one of the plurality of second layer neurons, wherein, among the plurality of second layer neurons, (a) the neuron which has the activation instruction obtained from the comparison unit may output a predetermined value as the second signal value, and (b) a neuron which does not have the activation instruction obtained from the comparison unit may output, as the second signal value, a value different from the predetermined value.

With this structure, the comparison unit can evaluate each of the neurons belonging to the second layer according to relative ranks based on the total sums of the input values, and activate each of the neurons that satisfy the predetermined evaluation criterion. In other words, it is possible to select the plan for the feature extraction device to extract features of target data, according to the relative ranks based on the total sums of the input values.

In addition, each of the plurality of neurons may (A) output the first signal value to the other neuron when the number of expressed genes that match between the neuron and the other one of the neurons is larger than or equal to a predetermined threshold value, and (B) add, to the first signal value, a weight that increases as the number of expressed genes that match between the neuron and the other one of the neurons increases, and output the weighted first signal value to the other neuron.

In addition, the hierarchical neural network may further include, as calculation units in a third layer, a plurality of third layer neurons each including at least one expressed gene, the hierarchical neural network may include a plurality of the second layer neurons, each of the plurality of second layer neurons may output the second signal value to each of third layer neurons, among the plurality of third layer neurons, which has the same expressed gene as the expressed gene included in the second layer neuron when the second signal value corresponding to the total sum of the first signal values is included within the predetermined range, and each of the plurality of third layer neurons may calculate, as a feature quantity of the target data, a third signal value corresponding to a total sum of a corresponding one or more of the plurality of the second signal values input to the third layer neuron.

In addition, the feature extraction device may further include a first comparison unit configured to output an activation instruction to each of second layer neurons, among the plurality of second layer neurons, which has a rank within a predetermined range in descending order of total sums of first signal values, each total sum being of first signal values input to a corresponding one of the plurality of second layer neurons; and a second comparison unit configured to output an activation instruction to each of third layer neurons, among the plurality of third layer neurons, which has a rank within a predetermined range in descending order of total sums of second signal values, each total sum being of second signal values input to a corresponding one of the plurality of third layer neurons, wherein, among the plurality of second layer neurons, (a) the second neuron which has the activation instruction obtained from the first comparison unit may output a predetermined value as the second signal value, and (b) a neuron which does not have the activation instruction obtained from the first comparison unit may output, as the second signal value, a value different from the predetermined value, and wherein, among the plurality of third layer neurons, (a) the neuron which has the activation instruction obtained from the second comparison unit may output a predetermined value as the third signal value, and (b) a neuron which does not have the activation instruction obtained from the second comparison unit may output, as the third signal value, a value different from the predetermined value.

With this structure, it is possible to extract features of the target data more precisely by increasing the number of layers even when a two-layer structure is not sufficient to extract features of the target data.

In addition, the feature extraction device may further include an expressed gene assignment unit configured, for each of the plurality of first layer neurons, the plurality of second layer neurons, and the plurality of third neurons: (i) to select at least one gene from a gene repertory including a plurality of genes each indicating a predetermined attribute value; and (ii) to assign each of the at least one selected gene as the expressed gene; a first comparison unit configured to output an activation instruction to each of second layer neurons, among the plurality of second layer neurons, which has a rank higher than or equal to a predetermined threshold value, the rank being based on a total sum of the first signal values input to the second layer neuron; and a second comparison unit configured to output an activation instruction to each of third layer neurons, among the plurality of third layer neurons, which has a rank higher than or equal to a predetermined threshold value, the rank being based on a total sum of the second signal values input to the third layer neuron, wherein each of the plurality of first layer neurons may obtain a value of the input data obtained by dividing the target data by the number of first layer neurons, and output, as the first signal value, the value of the input data to the second layer neuron which has the same expressed gene as the expressed gene included in the first layer neuron, each of the plurality of second layer neurons may output 1 as the second signal value when the second layer neuron has the activation instruction obtained from the first comparison unit, and output 0 as the second signal value when the second layer neuron does not have the activation instruction obtained from the first comparison unit, and each of the plurality of third layer neurons may output 1 as the third signal value when the third layer neuron has the activation instruction obtained from the second comparison unit, and output 0 as the third signal value when the third layer neuron does not have the activation instruction obtained from the second comparison unit.

With this structure, it is possible to extract features of the target data by selectively activating neurons each having a relatively large input value transmitted from the upper layer in signal transmission between the first layer and the second layer or the upper layer in signal transmission between the second layer and the third layer.

In addition, the feature extraction device may further comprise an expressed gene assignment unit configured, for each of the plurality of first layer neurons, the plurality of second layer neurons, and the plurality of third layer neurons (i) to randomly select at least one gene from a gene repertory including a plurality of genes each indicating a predetermined attribute value, and (ii) to assign each of the at least one selected gene as the expressed gene; a first comparison unit configured to obtain, for each of the plurality of second layer neurons, a rank based on a total sum of the first signal values input to the second layer neuron, and to output an activation instruction to each of one or more second layer neurons, among the plurality of second layer neurons, which has a rank lower than or equal to a rank predetermined as a threshold value; a second comparison unit configured to obtain, for each of the plurality of third layer neurons, a rank based on a total sum of a corresponding one or more of the second signal values input to the third layer neuron, and to output an activation instruction to each of one or more third layer neurons, among the plurality of third layer neurons, which has a rank lower than or equal to a predetermined threshold value, wherein each of the plurality of first layer neurons may obtain a value of the input data obtained by dividing the target data according to the number of first layer neurons, and output, as the first signal value, the value of the input data to the second layer neuron which has the same expressed gene as the expressed gene included in the first layer neuron, each of the plurality of second layer neurons may output 1 as the second signal value when the second layer neuron has the activation instruction obtained from the first comparison unit, and output 0 as the second signal value when the second layer neuron does not have the activation instruction obtained from the first comparison unit, and each of the plurality of third layer neurons may output 1 as the third signal value when the third layer neuron has the activation instruction obtained from the second comparison unit, and output 0 as the third signal value when the third layer neuron does not have the activation instruction obtained from the second comparison unit.

With this structure, it is possible to extract features other than the features of the target data by selectively activating neurons each having a relatively small input value transmitted from the upper layer in signal transmission between the first layer and the second layer or the upper layer in signal transmission between the second layer and the third layer.

In other words, the number of the expressed genes is plural, and it is also good to determine the frequency of each of the expressed genes included in each of the second neurons such that the frequency increases with increase in the number of or the magnitudes of the first signal values input to the second neuron, and output, as the feature quantities of the target data, gene codes which are information indicating a distribution of sums of frequencies of the expressed genes, each sum being a sum of frequencies of a corresponding one of the expressed genes included in some of the plurality of second neurons.

The present invention can be realized not only as such a feature extraction device but also as a feature extraction method having the steps corresponding to the unique units of the feature extraction device and a program for causing a computer to execute the unique steps of the image extraction method. Such a program can naturally be distributed through recording media such as CD-ROMs and/or communication media such as the Internet.

Furthermore, the present invention can be implemented as a semiconductor integrated circuit (LSI) including a part or all of the functions of the feature extraction device and a feature extraction system including the feature extraction device.

### [Advantageous Effects of Invention]

The present invention provides a feature extraction device capable of extracting features of recognition targets without requiring any prior learning.

### [Brief Description of Drawings]

[FIG. 1] FIG. 1 is a conceptual diagram showing an example of pattern recognition performed by a feature extraction device according to an embodiment.
[FIG. 2] FIG. 2 is a block diagram showing an example of a structure of the feature extraction device according to the embodiment and a variation thereof.
[FIG. 3] FIG. 3 is a diagram illustrating signal transmission processes in a conventional neural network.
[FIG. 4] FIG. 4 is a diagram illustrating signal transmission processes in a matching network in the feature extraction device according to the embodiment and the variation thereof.
[FIG. 5] FIG. 5 is a schematic view of a similar image search process performed by the feature extraction device according to the embodiment.
[FIG. 6] FIG. 6 is a diagram illustrating a structure of a three-layer matching network in the feature extraction device according to the embodiment and the variation thereof.
[FIG. 7] FIG. 7 is a flowchart of processes performed by the feature extraction device according to the embodiment and the variation thereof.
[FIG. 8] FIG. 8 is a flowchart of exemplary processes for generating a matching network in the feature extraction device according to the embodiment and the variation thereof.
[FIG. 9A] FIG. 9A is a diagram of an exemplary gene expression matrix in the embodiment and the variation thereof.
[FIG. 9B] FIG. 9B is a diagram of an exemplary connection matrix in the embodiment and the variation thereof.
[FIG. 10] FIG. 10 is a flowchart of processes in the first layer in the matching network in the feature extraction device according to the embodiment and the variation thereof.
[FIG. 11] FIG. 11 is a diagram showing kinds of processing performed by a comparison unit included in the feature extraction device according to the embodiment and the variation thereof.
[FIG. 12] FIG. 12 is a schematic view of a dissimilar image search process performed by the feature extraction device according to the variation of the embodiment.
[FIG. 13] FIG. 13 is a diagram showing examples of results of similar image searches and dissimilar image searches performed by the feature extraction device according to the embodiment and the variation thereof.
[FIG. 14] FIG. 14 is a diagram showing the relationships between the numbers of layers and diversity of expressed genes in each of a matching network (MN) and a random network (random).
[FIG. 15A] FIG. 15A is a diagram showing results of extracting features of an image using a matching network.
[FIG. 15B] FIG. 15B is a diagram showing results of extracting features of another image using a matching network.
[FIG. 15C] FIG. 15C is a diagram showing results of extracting features of still another image using a matching network.
[FIG. 16] FIG. 16 is a diagram of a matrix of 12 × 12 segments of gene codes respectively included in one hundred and four first layer neurons.
[FIG. 17A] FIG. 17A is a diagram in which each of segments including a gene code of "1" in FIG. 16 is assigned with "1", and the other segments are empty.
[FIG. 17B] FIG. 17B is a diagram in which each of segments including a gene code of "2" in FIG. 16 is assigned with "2", and the other segments are empty.
[FIG. 17C] FIG. 17C is a diagram in which each of segments including a gene code of "3" in FIG. 16 is assigned with "3", and the other segments are empty.
[FIG. 18] FIG. 18 provides images showing a list of patterns of gene codes in the first layer of a given matching network.
[FIG. 19] FIG. 19 is images obtained by binarizing fifty arbitrarily selected images.
[FIG. 20] FIG. 20 is a diagram of examples of artificially generated prototype images.
[FIG. 21A] FIG. 21A is a diagram showing the numbers of kinds of tea indicated by one hundred and four people as favorite kinds of tea.
[FIG. 21B] FIG. 21B shows a histogram of the numbers of conventional kinds of tea favored by people who favor new kinds of tea.
[FIG. 22] FIG. 22 is a diagram showing data obtained by adding data of favorites of the one hundred and four evaluators shown in FIG. 21A to data in the first layer of a matching network.
[FIG. 23] FIG. 23 is a diagram showing a matching network including a combination generated according to a rule of generating a combination only between neurons having three or more matching tea numbers.
[FIG. 24] FIG. 24 is a diagram showing a matching network including combinations generated according to a rule of generating one or more connections between neurons for each of lower layer neurons such that the number of combinations corresponds to the number of matching tea numbers.
[FIG. 25] FIG. 25 is a diagram showing an example case of using different connection types as a set in a matching network.
[FIG. 26] FIG. 26 is an external view of a computer system which includes the feature extraction device according to the embodiment and the variation thereof.
[FIG. 27] FIG. 27 is a block diagram showing a hardware structure of a computer system which includes the feature extraction device according to the embodiment and the variation thereof.
[FIG. 28] FIG. 28 is a diagram showing results of similar image searches each performed using neuron codes or using gene codes.

### [Description of Embodiment]

Hereinafter, embodiments of the present invention are described with reference to the drawings. Each of the embodiments described below shows specific preferred examples of the present invention. The numerical values, shapes, structural elements, the arrangement and connection of the structural elements, steps, the processing order of the steps etc. shown in the following embodiments are mere examples. Therefore, the embodiments do not limit the present invention. The present invention is limited only by the Claims. Therefore, among the structural elements in the following embodiments, structural elements not recited in any one of the independent claims which define the most generic concept of the present invention are described as arbitrary structural elements which are not always necessary for achieving the aim of the present invention but constitute a preferred embodiment.

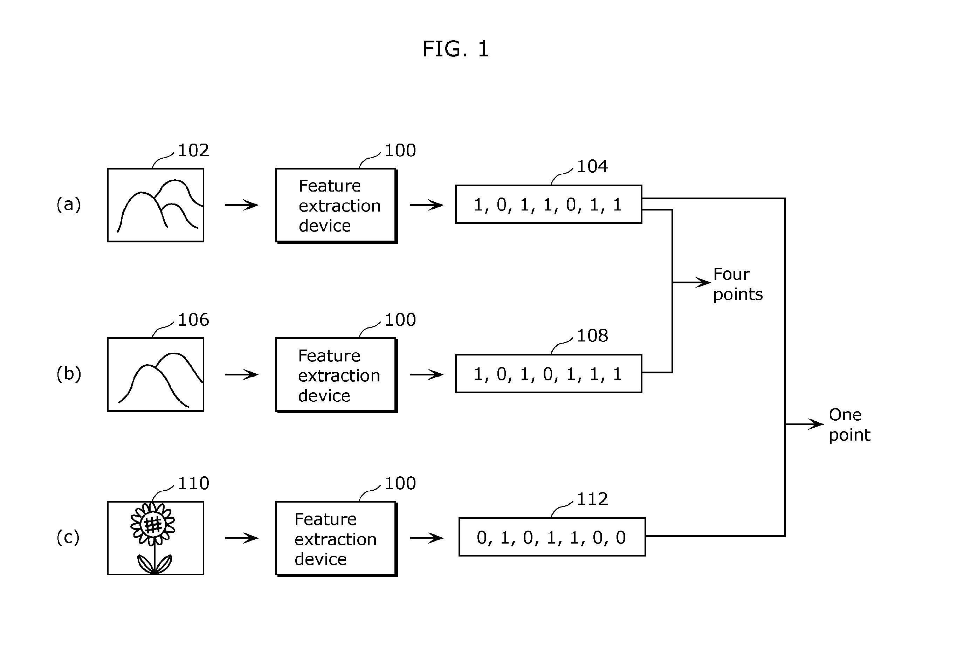

FIG. 1 is a conceptual diagram showing an example of pattern recognition performed by a feature extraction device 100 according to this embodiment. Here is considered a case where the feature extraction device 100 recognizes which one of an image 106 and an image 110 is more similar to an image 102.

As shown in FIG. 1, the feature extraction device 100 obtains, for example, image data, and outputs a motion vector which is a vector having a length of 1 indicating a feature quantity of the image data.

It is assumed here that the feature extraction device 100 receives, as an input, the image data of the image 102, and outputs a feature vector 104 as the feature vector. Likewise, it is assumed that the feature extraction device 100 receives, as an input, the image data of an image 106 similar to the image 102, and outputs a feature vector 108. In addition, it is assumed that the feature extraction device 100 receives, as an input, the image data of an image 110 dissimilar to the image 102, and outputs a feature vector 112.

In this case, a user can find out the degree of similarity between the images by calculating the degree of matching (for example, an internal product) between the feature vectors output by the feature extraction device 100.

In the above example, the internal product between the feature vector 104 and the feature vector 108 is 4, and thus the degree of similarity between the image 102 and the image 106 is calculated as 4 points.

Likewise, the internal product between the feature vector 104 and the feature vector 112 is 1, and thus the degree of similarity between the image 102 and the image 110 is calculated as 1 point.

Accordingly, among the image 106 to image 110, the image most similar to the image 102 is determined to be the image 106.

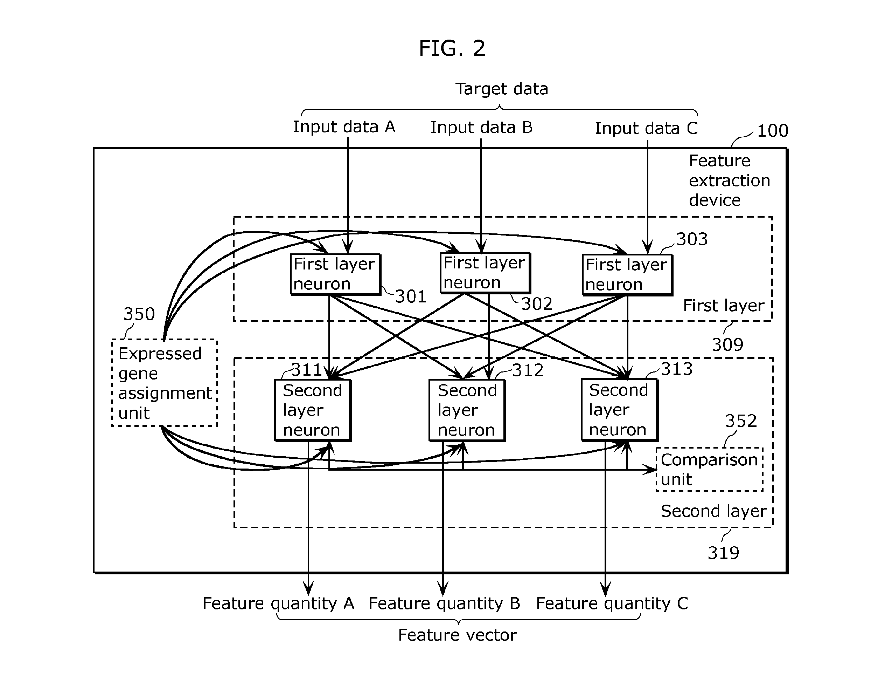

FIG. 2 is a block diagram showing a structure of the feature extraction device 100 according to this embodiment.

As shown in FIG. 2, the feature extraction device 100 includes a hierarchical neural network. No upper limit is placed on the number of hierarchical layers, whereas at least two layers are required. For illustration, FIG. 2 shows an example of a two-layer neural network.

As will be described later, each of the hierarchical layers includes a group of neurons which are calculation units for outputting feature quantities indicating features of input data. Each of the neurons is initially in a non-activated state, and is switched between an activated state and a non-activated state.

The feature extraction device 100 includes a plurality of first layer neurons 301 to 303 which are calculation units in the first layer 309, a plurality of second layer neurons 311 to 313 which are calculation units in the second layer 319, and a comparison unit 352.

Each of the first layer neurons and the second layer neurons is randomly assigned in advance with at least one of genes in a plurality of predetermined genes (hereinafter referred to as a "gene repertory"). Each of the genes assigned to any one of the neurons is referred to as an expressed gene of the neuron. The expressed gene is an attribute value to be used to determine whether or not a signal can be transmitted between adjacent hierarchical layers (for example, from a first layer neuron to a second layer neuron) according to a matching rule to be described later.

When the feature extraction device 100 is mounted on a computer, such expressed genes are used as identifiers each represented in the form of a numerical value, a character string, a bitstream, or the like.

A signal path determined using expressed genes according to a matching rule is hereinafter referred to as a matching network.

The first neurons 301 to 303 respectively receive input data A to C obtained by dividing the target data from which features should be extracted by the feature extraction device 100.

In addition, the respective first neurons 301 to 303 determine first signal values based on the input data A to C, and output the values to the second layer neurons connected through the matching network.

Examples of conceivable methods of determining such first signal values include: a method of binarizing input data (outputting 1 as a first signal value in response to an input larger than or equal to a predetermined threshold value and outputting 0 as a first signal value in response to an input smaller than the predetermined threshold value or in the case of no input); a method of applying monotonously increasing scaling functions; and a method of outputting raw input values as first signal values. Another method is possible as a method of determining such first signal values as long as the method is for determining the first signal values such that the values increase as the values of input data increase.

Each of the second layer neurons 311 to 313 calculates a total sum of the first signal values obtained from a corresponding first layer neuron.

Next, each of the second layer neurons 311 to 313 outputs the calculated total sum to the comparison unit 352, and obtains a comparison result from the comparison unit 352.

Each of the second layer neurons 311 to 313 calculates a second signal value based on the comparison result obtained from the comparison unit 352, and outputs the calculated second signal value. This is a feature quantity of the target data.

In addition, a set of all the feature quantities output by all of the second layer neurons is a feature vector.

Here, a second layer neuron 311 outputs a second signal value as a feature quantity A, a second layer neuron 312 outputs a second signal value as a feature quantity B, and a second layer neuron 313 outputs a second signal value as a feature quantity C, and data obtained by arranging the feature quantities A, B, and C in this listed order is the feature vector of the target data.

It is to be noted that the total number of first layer neurons and the second layer neurons depends on the amount of target data. For example, such a total number is approximately in a range from three to a hundred thousands.

The comparison unit 352 compares the total values (total sums) obtained from the second layer neurons 311 to 313, and selects one or some of the second layer neurons for which an activation instruction should be output according to the comparison result.

For example, it is conceivable that the comparison unit 352 gives each of the second layer neurons a rank based on the magnitude of the obtained total value, and outputs "an activation instruction" as a result of the comparison to second layer neurons within the top 10%.

Each second layer neuron shifted to an activated state in response to the activation instruction outputs 1 to the next layer and then returns back to a non-activated state. On the other hand, each second layer neuron in a non-activated state which does not have any activation instruction outputs 0 to the next layer.

The expressed gene assignment unit 350 randomly selects at least one gene from the gene repertory for each of the first layer neurons and the second layer neurons, and assigns the selected gene thereto.

The gene repertory includes different genes, the number of which is, specifically, in an approximate range from two to a hundred. In addition, the number of genes assigned to one neuron is approximately one to ten. As will be described later, these numbers are based on a biological hypothesis that "the line of a local neural circuit which carries out information processing in a brain is realized by several tens of gene repertories".

This embodiment is described assuming, for simplicity, that the numbers of the expressed genes assigned to the respective neurons are equal to each other although the numbers of expressed genes assigned to the respective neurons may vary.

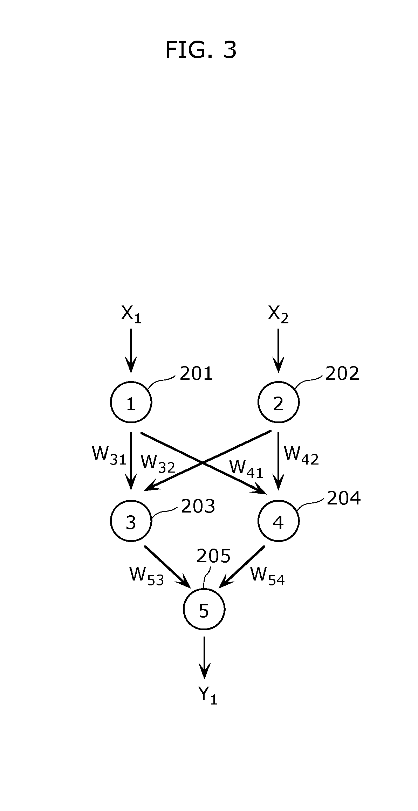

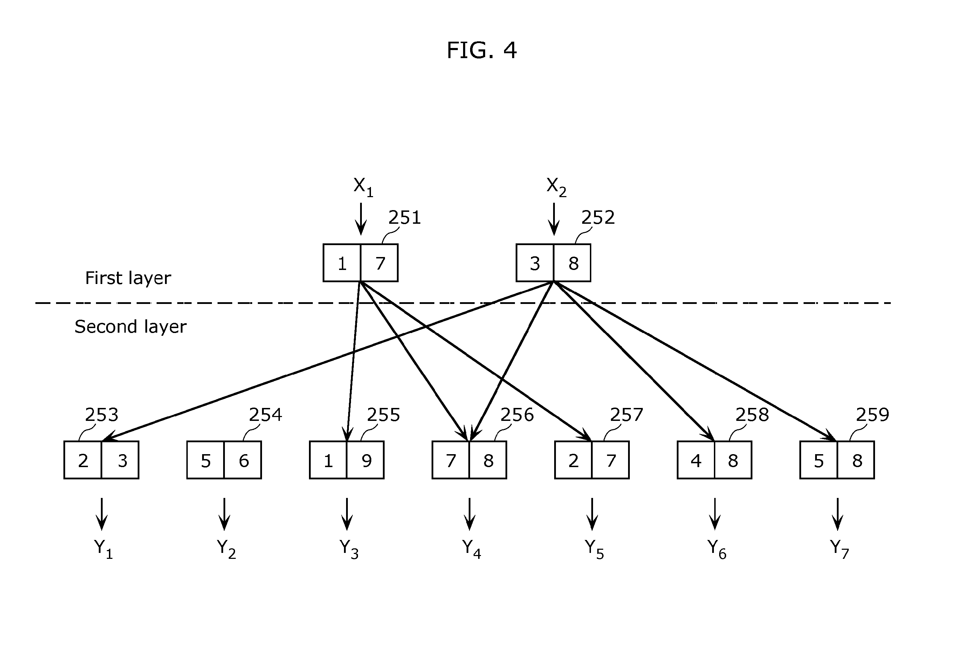

Next, with reference to FIG. 3 and FIG. 4, a matching rule which is a feature of a neural network included in the feature extraction device 100 according to this embodiment is described in comparison with a conventional neural network.

FIG. 3 is a diagram illustrating signal transmission processes in a conventional hierarchical neural network. This hierarchical neural network is briefly described here because it is a widely known technique.

The neural network shown in FIG. 3 is a three-layer hierarchical neural network including five neurons 201 to 205.

In general, the hierarchical neural network includes a plurality of hierarchical layers each referred to as an input layer, an intermediate layer, or an output layer. In this network structure, the neurons are arranged in the layers and every neurons in the same hierarchical layer does not have any signal path therebetween. On the other hand, every neurons in a layer and every neurons in an adjacent layer have a signal path therebetween.

This signal path is for one-way signal transmission from the input layer to the output layer. Thus, signal transmission is performed in one direction from an upper layer to a lower layer.

In the example of FIG. 3, the neurons 201 and 202 are in the input layer (first layer), and the neurons 203 and 204 are in the intermediate layer (second layer), and the neuron 205 is in the output layer (third layer).

Each of the signal paths connecting the corresponding neurons has a weight, and each of the neurons obtains, as an input signal, a value obtained by multiplying a value output from the upper layer by the weight. In addition, each neuron has a threshold value and an activation function, inputs a value obtained by subtracting the threshold value from a sum of the input signals to an activation function, and outputs a value obtained from the activation function to the neurons in the next layer.

For example, it is assumed here that the signal path from the neuron 201 to the neuron 203 has a weight W₃₁, the signal path from the neuron 202 to the neuron 203 has a weight W₃₂, and the neuron 203 has a threshold W₃₀, and that the neuron 203 has an activation function f().

When X₁ is input to the neuron 201 and X₂ is input to the neuron 202, the sum of the input signals output to the neuron 203 is obtained according to S₁ = X₁ × W₃₁ + X₂ × W₃₂ - W₃₀. Thus, the neuron 203 outputs H₁ = f(S₁) to the neuron 205.

Likewise, the neuron 204 calculates a sum S₂ of the input signals to obtain H₂ which is an output of an activation function according to H₂ = f(S₂), and outputs H₂ to the neuron 205.

The neuron 205 which is in the output layer calculates S₃ which is a sum of the input signals obtained from the neurons 203 and 204, according to S₃ = H₁ × W₅₃ + H₂ × W₅₄ - W₅₀ where W₅₃ and W₅₄ are weights and W₅₀ is a threshold value. Subsequently, the neuron 205 calculates H₃ which is an output of an activation function according to H₃ = f(S₃), and outputs H₃ as Y₁.

Through these processes, the hierarchical neural network shown in FIG. 3 outputs Y₁ as a feature vector of the inputs X₁ and X₂ which are the target data.

Here, if the output value of Y₁ is incorrect, "learning" mentioned earlier is required although such learning is unnecessary when the output value of Y₁ is as expected (correct).

More specifically, the weights of the signal paths are modified such that the difference between Y₁ and the output Y₁ (Y₂ - Y₁) is reduced assuming that the expected output (correct feature vector) is Y₂. In other words, when the output Y₁ is larger than Y₂, the weights of the signal paths are reduced so that the output Y₁ is smaller. When the output Y₁ is smaller than Y₂, the weight of the signal paths are increased so that the output Y₁ is larger.

Subsequently, new inputs X₃ and X₄ are input to the hierarchical neural network with the modified weights. This cyclical procedure of inputting, outputting, and learning is repeated until the resulting output Y₃ is converged within a range around the expected output Y₄.

As described above, the conventional hierarchical neural network includes a great number of parameters such as (1) weights of signal paths, (2) threshold values for neurons, (3) the kinds of activation functions, and (4) learning coefficients each multiplied to the difference between a teacher signal and an output in learning. These parameters are determined through "learning" using a great number of teacher signals (sets of inputs X₁ and X₂ and output Y₂ expected from the inputs).

As a result, it is possible to generate a neural network for outputting a proper feature vector to data other than the teacher signals.

On the other hand, a matching network included in the feature extraction device 100 according to this embodiment does not always require such learning.

FIG. 4 is a diagram illustrating signal transmission processes in a matching network in the feature extraction device 100 according to this embodiment.

As shown in FIG. 4, this matching network includes a plurality of hierarchical layers as in the conventional hierarchical neural network. Likewise, signal paths are for one way signal transmission from the input layer to the output layer, and the signals are transmitted only in one way direction from a current layer to the next layer. For simplicity, the intermediate layer is not shown in FIG. 4.

This matching network in the feature extraction device according to this embodiment does not add weights to the signal paths. The matching network determines signal output destinations based on expressed genes assigned randomly, instead of being based on such weights.

Here, each of the neurons 251 to 259 shown in FIG. 4 includes two expressed genes.

For example, in the first layer, the neuron 251 includes expressed genes denoted respectively as numbers 1 and 7, and the neuron 252 includes expressed genes denoted respectively as numbers 3 and 8. The expressed genes included in each of the neurons are determined by the expressed gene assignment unit 350 completely randomly.

This network differs from the conventional hierarchical neural network in the point of forming signal paths between neurons according to the matching rule based on expressed genes.

More specifically, the neuron 251 includes the expressed genes with numbers 1 and 7, and thus outputs a signal to each of the neurons in the second layer including at least one of the expressed genes with numbers 1 and 7. Thus, the neuron 251 outputs a signal to three neurons of neurons 255, 256, and 257. Likewise, the neuron 252 including the expressed genes with numbers 3 and 8 outputs a signal to four neurons of neurons 253, 256, 258, and 259.

In other words, the matching rule used here is the rule of allowing transmission of a signal only between neurons having at least one same expressed gene in the signal transmission from one of the neurons to another one of the neurons. The plurality of neurons are not always included in a hierarchical structure. In the above hierarchical neural network, no intra-layer signal path is formed.

More specifically, it is assumed here that X₁ is input to the neuron 251, and X₂ is input to the neuron 252.

Here, the neurons 251 and 252 output raw input values.

At this time, the sums of input signals to the neurons in the second layer are respectively as follows: X₂ for the neuron 253, 0 for the neuron 254, X₁ for the neuron 255, X₁ + X₂ for the neuron 256, X₁ for the neuron 257, X₂ for the neuron 258, and X₂ for the neuron 259.

Each of the neurons in the second layer determines an output value according to the total sum of the input signals. Various methods are conceivable as methods of determining such output values. Here, it is assumed that neurons having a total sum of input signals within the top 50% output 1, and the other neurons output 0.

More specifically, when X₁ = 3 and X₂ = 1 are satisfied, the sums of input signals to the neurons in the second layer are respectively as follows: 1 for the neuron 253, 0 for the neuron 254, 3 for the neuron 255, 4 for the neuron 256, 3 for the neuron 257, 1 for the neuron 258, and 1 for the neuron 259.

Thus, output values (feature quantities) from the respective neurons in the second layer are, Y₁ = 0, Y₂ = 0, Y₃ = 1, Y4 = 1, Y₅ = 1, Y₆ = 0, and Y₇ = 0. The vector in which these feature quantities are arranged is a feature vector.

Thus, the feature vector for the inputs X₁ and X₂ is determined to be (0, 0, 1, 1, 1, 0, 0) using the matching network.

As described above, in the matching network, the expressed genes are randomly assigned as the attribute values of the neurons, and the signals are transmitted between the neurons having the same expressed gene(s). The assignment of the expressed genes is determined when the network is generated. Thus, it is possible to extract the features without execution of learning using teacher signals.

In the above description, the neurons form signal paths between other neurons according to the matching rule. However, this does not always mean presence or absence of physical connection relationships. For example, at the time of mounting a matching network using an electric circuit or a computer program, it is only necessary that the neurons should transmit or receive signals to or from other neurons according to the matching rule assuming that communication is possible between all neurons.

Next, a more detailed description is given of processes by the feature extraction device 100 according to this embodiment, through a description of evaluation experiments performed to check that resulting feature vectors of target data were features correctly extracted.

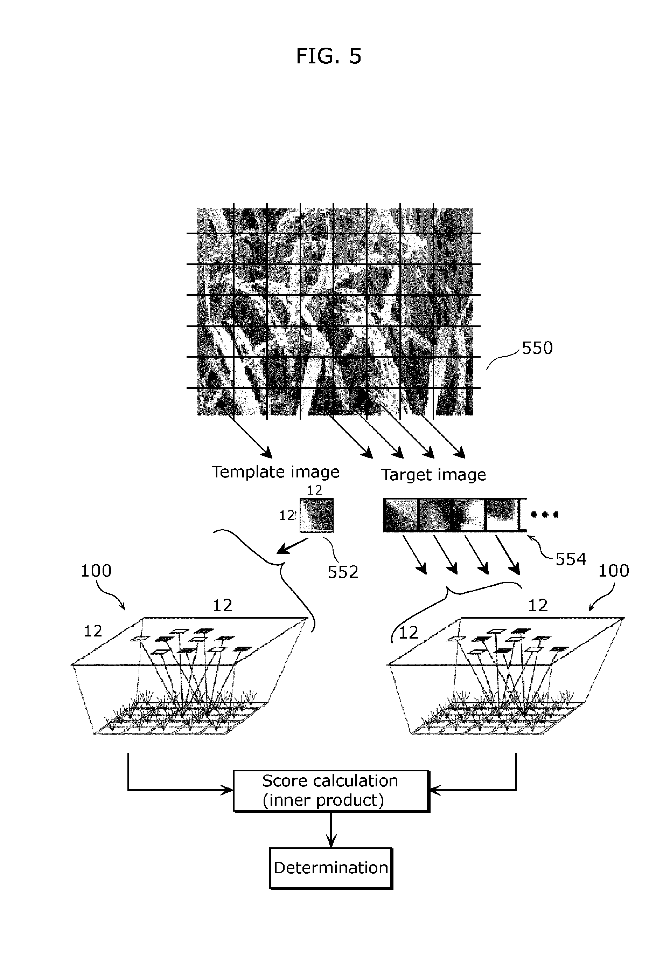

FIG. 5 is a schematic view of a similar image search process performed by the feature extraction device 100 according to the embodiment.

As shown in FIG. 5, matching degrees (scores) each indicating the degree of matching between one of feature vectors obtained by inputting a template image 552 to the feature extraction device 100 and each of feature vectors obtained by inputting each of a plurality of target images 554 are calculated as inner products of vectors. Images having a higher score are determined to be images more similar to the template image 552.

The template image 552 and the target images 554 may be arbitrary images. Here, an image of one of blocks obtained by dividing an image (of rice) 550 is used as the template image 552, and images of the other blocks are used as the target images 554.

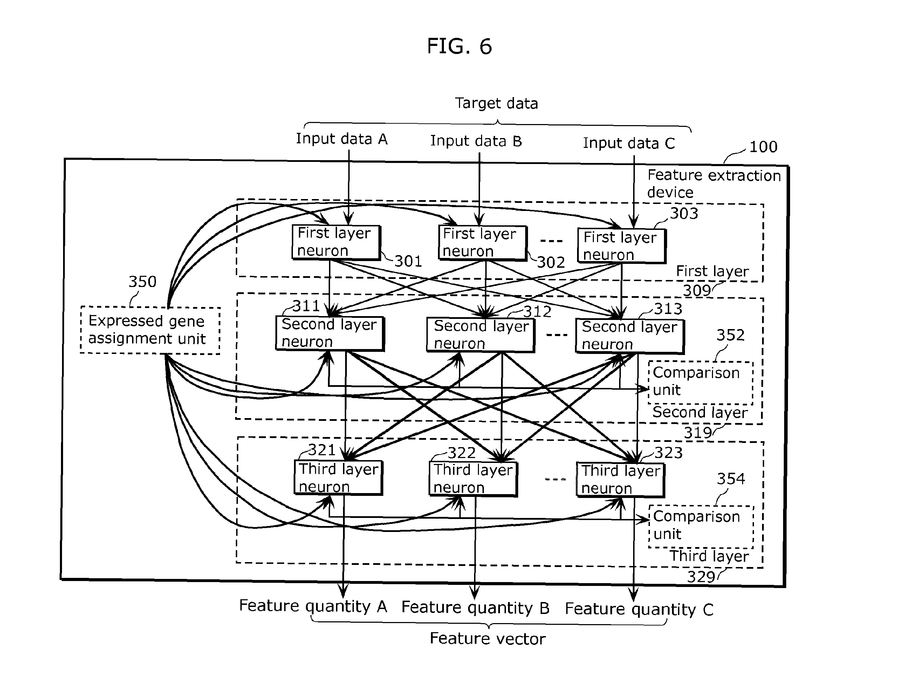

FIG. 6 is a block diagram showing a structure of a three-layer matching network included in the feature extraction device 100 according to this embodiment.

Among the structural elements, the same structural elements as in those in the two-layer matching network shown in FIG. 2 are assigned with the same reference numerals, and no detailed descriptions thereof are repeated.

First layer neurons 301 to 303 in the first layer 309 receive inputs of pixel values (for example, integer numbers of 0 to 255) of input data obtained by dividing the template image 552 which is target data on a pixel-by-pixel basis. As will be described later, the first neuron requires data of all the pixels of the template image 552. Each of the first-layer neurons 301 to 303 outputs input pixel values to the second layer according to a matching rule.

Each of second-layer neurons 311 to 313 in the second layer 319 sums received input values, and outputs the total value to a comparison unit 352. In addition, each of the second layer neurons 311 to 313 outputs an output value based on the comparison result to the third layer according to a matching rule.

Each of third layer neurons 321 to 323 in the third layer 329 sums received input values, and outputs the total value to a comparison unit 354. In addition, each third layer neurons 321 to 323 obtains a comparison result from the comparison unit 354, and outputs a feature quantity based on the comparison result.

Prior to calculation in each of the first layer neurons, the second layer neurons, and the third layer neurons, an expressed gene assignment unit 350 randomly selects, for each of the neurons, at least one gene from a predetermined gene repertory, and assigns the at least one gene thereto as the expressed gene of the neuron.

The comparison unit 352 obtains, for calculation, the sums of input values to the respective second layer neurons in the second layer 319. Furthermore, according to a predetermined activation criterion, neurons for which an activation instruction is output are determined based on the results of the obtainment.

Likewise, a comparison unit 354 obtains the sums of input values to the respective third layer neurons in the third layer 329. Furthermore, according to predetermined activation criteria, neurons for which an activation instruction is output are determined based on the results of the obtainment.

In a similar image search, commonness in pixels included in each image needs to be represented in a feature quantity. Thus, each of the second layer neurons and the third layer neurons needs to output a logical sum (AND) of the input values from the immediately-previous layer.

Accordingly, as will be described later, the criterion that "whether or not the current neuron has a sum of input values within the top 10%" is employed as the activation criterion used by each of the comparison unit 352 and the comparison unit 354, and an activation instruction is output to each of the neurons having a sum of input values within the top 10%

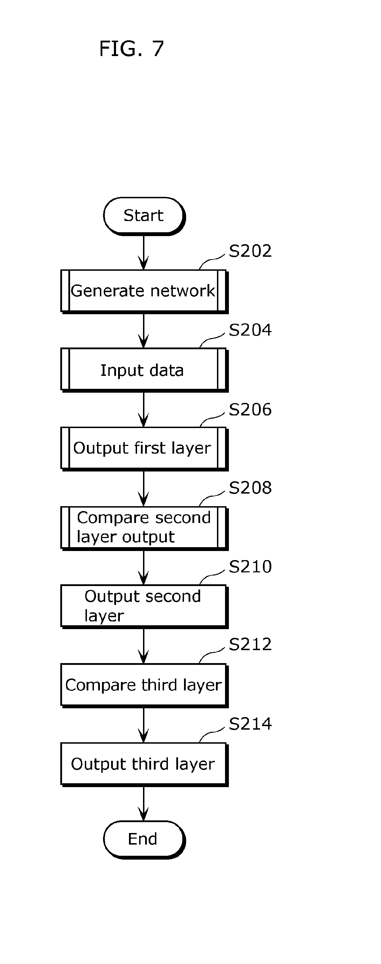

FIG. 7 is a flowchart of processes performed by the feature extraction device 100 according to this embodiment.

First, the feature extraction device 100 generates a matching network which is a calculation unit (S202). A method of generating the matching network will be described later.

Next, the feature extraction device 100 inputs target data to the generated matching network (S204). The target data is, for example, the template image 552 and the target images 554. As described above, each of the neurons in the first layer 309 receives, in an associated manner, inputs of pixel values of input data obtained by dividing the target data on a pixel-by-pixel basis. This will be described later.

Next, each of the neurons in the first layer 309 outputs the input pixel values as first signal values to the second layer according to the aforementioned matching rule (S206).

Next, each of the neurons in the second layer 319 calculates the total value of the obtained first signal values, and outputs the total value to the comparison unit 352. The comparison unit 352 outputs an activation instruction to each of the neurons selected based on the comparison results among the neurons in the second layer 319 (S209). This comparison process performed by the comparison unit 352 will be described in detail later.

Next, among the neurons in the second layer 319, the neurons with the activation instruction and the other neurons outputs 1 and 0, respectively, as second signal values to corresponding neurons in the third layer (S210). The output destinations are determined also according to a matching rule.

Next, each of the neurons in the third layer 329 calculates the total value of the second signal values obtained from the second layer, and outputs the total value to the comparison unit 354. The comparison unit 354 outputs an activation instruction to each of the neurons selected based on the comparison results among the neurons in the third layer 329 (S212).

Next, among the neurons in the third layer 329, the neurons with the activation instruction and the other neurons with a non-activation instruction outputs 1 and 0, respectively, as feature quantities (S214).

The feature quantities output from the respective neurons in the third layer 329 are arranged, for example, in an order from the left and determined to be a feature vector, which makes it possible to perform following processes such as calculation of the degree of similarity of target data.

This method of calculating a feature vector from feature quantities is an example. Such a feature vector can be calculated by determining the arrangement order of neurons and arranging feature quantities output from the respective neurons in the arrangement order of the neurons. Examples of conceivable methods of determining the arrangement order of neurons include a method of assigning identifiers to the respective neurons in the third layer 329 and sorting the identifiers in an ascending order or a descending order. Other than such methods of arranging sort results one-dimensionally, methods of arranging sort results as multi-dimensional (two or more dimensional) vectors are conceivable.

The outline of the processes performed by the feature extraction device 100 to extract feature quantities from target data has been described above. Next, each of the processes is described in detail.

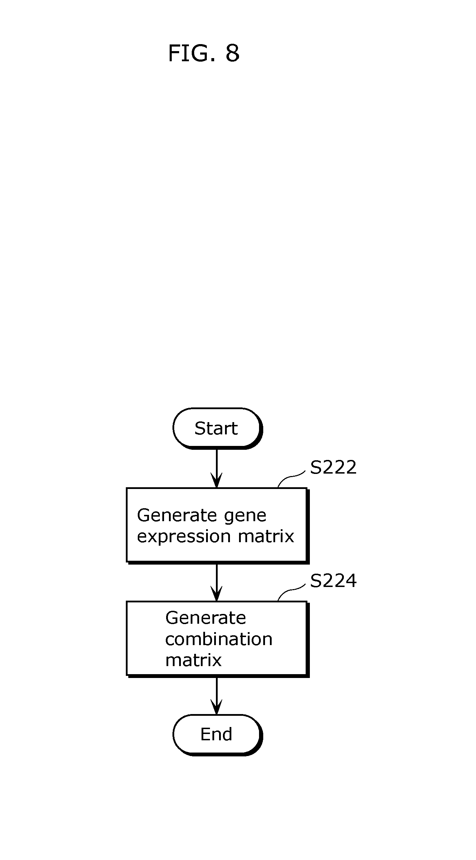

FIG. 8 is a flowchart showing exemplary processes for generating, in the form of a matrix, a matching network included in the feature extraction device 100 according to this embodiment. More specifically, this flowchart corresponds to Step S202 in FIG. 7.

First, the expressed gene assignment unit 350 generates a gene expression matrix using random numbers (S222).

The gene expression matrix is a matrix indicating which genes are assigned to each of the neurons in the matching network.

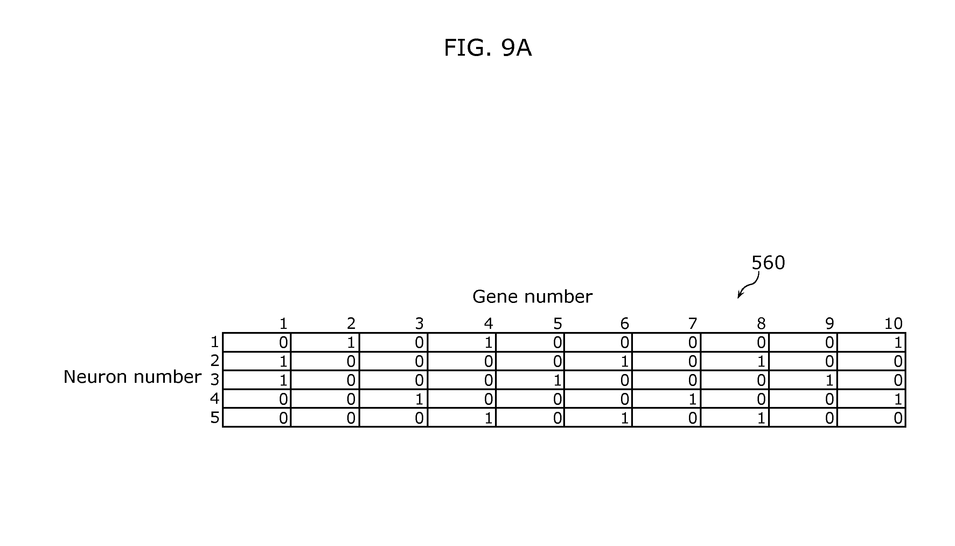

With reference to FIG. 9A, a gene expression matrix 560 is an exemplary gene expression matrix. Each of the rows in the gene expression matrix corresponds to the neuron number which is the identifier of the neuron. In addition, each of the columns of the gene expression matrix corresponds to the gene number of a gene included in a gene repertory. Here, the expressed gene can be represented not only by a number but also in any information form such as a symbol and a bitstream.

When a cell of the gene expression matrix has a value of "1", the neuron having the corresponding neuron number is assigned with the gene having the corresponding gene number.

For example, in the first line of the gene expression matrix 560, the cells having gene numbers of 2, 4, and 10 has a value of 1. Accordingly, the neuron having the neuron number 1 is assigned with the three genes having the gene numbers 2, 4, and 10.

In this embodiment, three genes are selected for each neuron from the gene repertory including a total of twenty different genes, and are assigned to the neuron. In short, each of the neurons has three expressed genes.

In addition, target data is image data of 12 × 12 pixels. As described earlier, one pixel is assigned to each of the neurons in the first layer, the number of neurons in the first layer is one hundred and four neurons. Here, it is assumed that the second layer includes a thousand neurons, and the third layer includes two hundreds and fifty neurons. The total number of neurons amounts to one thousand and ninety four neurons.

The gene expression matrices are generated for each of the layers. The first layer includes a gene expression matrix of 144 rows and 20 columns, the second layer includes a gene expression matrix of 1000 rows and 20 columns, and the third layer includes a gene expression matrix of 250 rows and 20 columns.

The expressed gene assignment unit 350 generates three different random numbers within a range from 1 to 20 as the gene numbers of expressed genes, and set a value "1" to cells each having the same gene number(s) as the generated random number(s). The expressed gene assignment unit 350 set a value "0" to the other cells.

This operation corresponds to a process of selecting the three genes from the gene repertory including the genes having the gene numbers within the range from 1 to 20.

The expressed gene assignment unit 350 randomly assigns the three genes to each neuron by performing the aforementioned random number generation process for each row.

Next, the feature extraction device 100 generates a connection matrix indicating combination relationships (that is, signal paths) between adjacent layers according to the generated gene expression matrix (matching rule) (S224).

In the three-layer matching network, the connection matrix includes two matrices which are a first to second layer connection matrix and a second to third layer connection matrix.

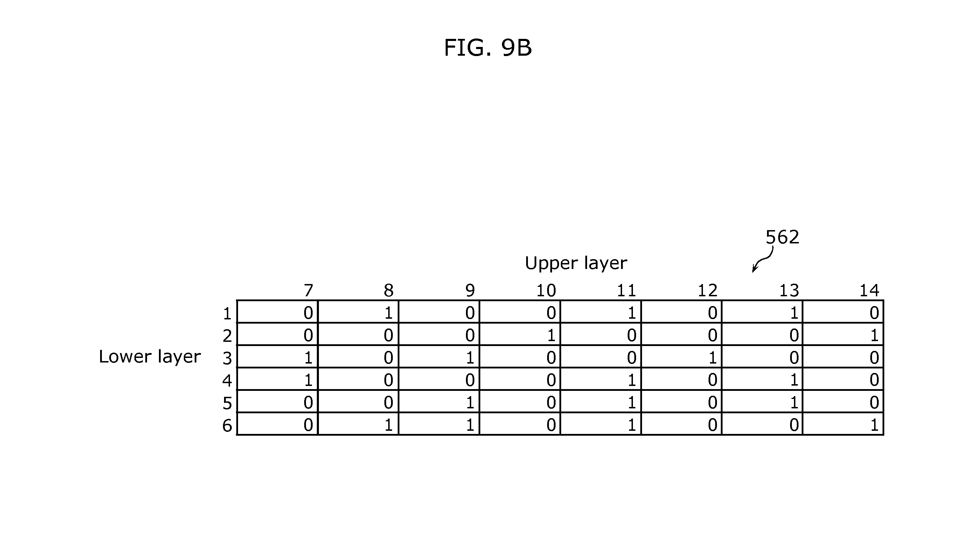

With reference to FIG. 9B, the connection matrix 562 is an exemplary connection matrix. Each of the connection matrices shows the neuron numbers of the neurons in the upper layer (for example, in the case of the first to second layer connection matrix, the upper layer is the first layer). In addition, each of the connection matrices shows the neuron numbers of the neurons in the lower layer (for example, in the case of the first to second layer connection matrix, the lower layer is the second layer).

Thus, the first to second layer connection matrix is the matrix of 1000 rows and 144 columns, and the second to third layer connection matrix is the matrix of 250 rows and 1000 lines.

In addition, when a cell has a value of "1", it is shown that a signal path from a neuron in the upper layer to a corresponding neuron in the lower layer is formed. In addition, when a cell has a value of "0", it is shown that no signal path from a neuron in the upper layer to a neuron in the lower layer is formed.

For example, in the connection matrix 562, the cell located at the first row and the second column has a value of 1. This shows that a signal path is formed which is from the neuron with neuron number 8 in the upper layer to the neuron with neuron number 1 in the lower layer.

The feature extraction device 100 generates such a connection matrix based on the previously generated gene expression matrix.

In other words, when a cell in the connection matrix has a value of 1, the corresponding neurons in the upper and lower layers are assigned with at least one same expressed gene. Thus, for example, it is possible to generate a connection matrix by searching out all possible combinations of two neurons one of which is in the upper layer and the other is in the lower layer and each of which has a cell having a value of 1, and to set the value 1 to the cells each included in the connection matrix and is associated with one of the searched-out combinations.

Hereinafter, the feature extraction device 100 performs the processes using the connection matrices generated in this way.

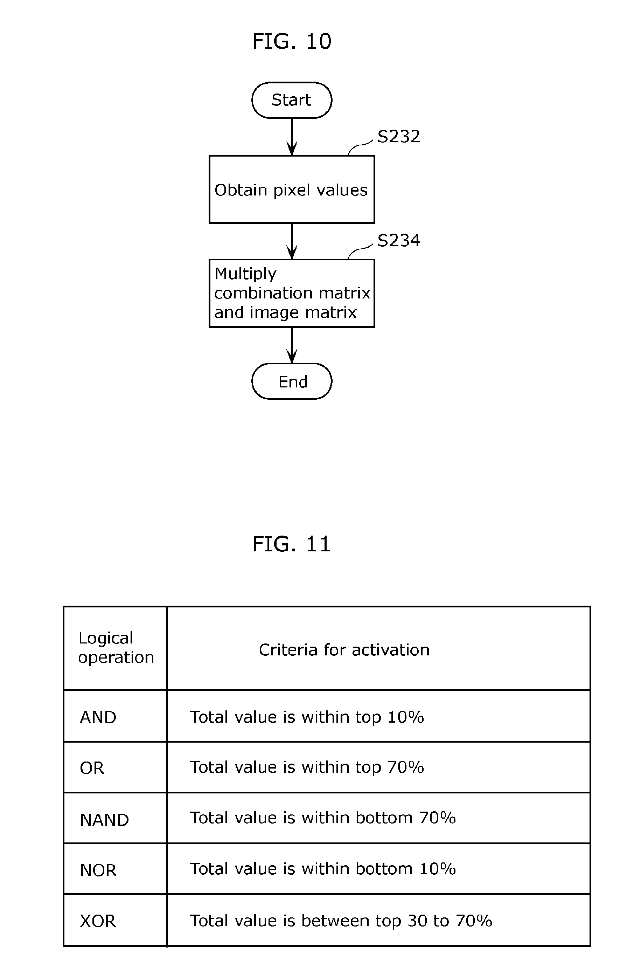

FIG. 10 is a flowchart of processes in the first layer in the matching network in the feature extraction device according to this embodiment. More specifically, this flowchart corresponds to Steps S204 and S206 in FIG. 7.

First, the feature extraction device 100 obtains one piece of the target data (S232). The target data is a black and white image of 12 × 12 pixels, and is obtained as a matrix of 12 rows and 12 columns. Each of the one hundred and four elements of the matrix corresponds to a pixel value within a range from 0 to 255.

Next, the feature extraction device 100 transforms the matrix of 12 rows and 12 columns representing the target data into a matrix of 144 rows and 1 column. This is referred to as an image matrix.

Next, the feature extraction device 100 multiplies the first to second layer connection matrix of 1000 rows and 144 columns generated in Step S224 (S234) and the image matrix. As a result, a matrix of 1000 rows and 1 column is generated. Each of the rows in the matrix shows the total value of the inputs from the first layer neurons to the one thousand neurons in the second layer transmitted according to the matching rule.

By using this matrix calculation, a computer can process signal transmission from the first layer neurons to the second layer neurons according to the matching rule.

The calculated total values of the inputs to the second layer neurons are output to the comparison unit 352.

Next, processes by the comparison unit 352 are described with reference to FIG. 11.

FIG. 11 is a diagram showing an activation criterion for use in a comparison process by the comparison unit 352 according to this embodiment. This comparison processes correspond to the comparison process of Step S208 performed by the comparison unit 352 in FIG. 7.

As shown in FIG. 11, the feature extraction device 100 is capable of selecting an activation criterion to be used by the comparison unit 352, and to thereby executing, for example, one of five logical calculations of AND, OR, NAND, NOR, and XOR.

For example, in the case of an activation criterion that the total value of inputs is within the top 10%, the comparison unit 352 sends an activation instruction to each of neurons that satisfy the criterion. As a result, each of the neurons having a value within the top 10% is shifted into an activated state, and outputs 1. Each of the other neurons remains in a non-activated state, and outputs 0. As a result, lower layer neurons having a greater number of positive inputs from the upper layer neurons is to output 1. This corresponds to an AND operation.

In another case of an activation criterion that the total value of inputs is within the top 70%, the comparison unit 352 sends an activation instruction to each of neurons that satisfy the criterion. As a result, each of the neurons having the total value within the top 70% is shifted to an activated state, and outputs 1. Each of the other neurons remains in a non-activated state, and outputs 0. As a result, each of the lower layer neurons outputs 1 after receiving positive inputs from a smaller number of neurons compared to the number of neurons in the case of the AND operation. This process corresponds to an OR operation.

In other words, the combinations of outputs from the neurons in the upper layer determine the total value of inputs received by the neurons in the lower layer. Based on similar ways of thinking, the five logical operations shown in FIG. 11 are defined as will be described later.

With an aim to search out an image similar to the template 552 from the target images 554, each of the comparison unit 352 and the comparison unit 354 calculates feature quantities of images similar to the input image based on the activation criterion for performing the AND operation.

The flow of processes performed by the feature extraction device 100 according to this embodiment has been described above. The following signal transmission using a matching rule in Step S210 in FIG. 7 is the same as in Step S206. The process of Step S212 performed by the comparison unit 354 is the same as the process of Step S208 performed by the comparison unit 352. Thus, no detailed descriptions are repeated.

Finally, in Step S214, the feature extraction device 100 outputs a feature vector composed of two hundreds and fifty numbers of "1" or "0" for each of pieces of the target data.

The procedure of searching a similar image based on the feature vector obtained in this way is as indicated earlier in FIG. 5. See FIG. 5. the feature extraction device 100 obtains a feature vector for each of the template image 552 and the target images 554, and then calculates the matching degree (such as an inner product) indicating the degree of matching between the feature vector of the template image 552 and each of the feature vectors of the respective target images 554.

The resulting inner product value is a score indicating the degree of similarity. It can be determined that an image having a larger inner product value has a higher degree of similarity with the template image 552.

To sum up, the feature extraction device 100 according to this embodiment includes a hierarchical neural network. This hierarchical neural network includes a plurality of first layer neurons (301 to 303) which are calculation units in the first layer and a plurality of second layer neurons (311 to 313) which are calculation units in the second layer. Each of the first layer neurons (301 to 303) and the second layer neurons (311 to 313) includes at least one expressed gene which is an attribute value for determining whether or not signal transmission is possible from the plurality of first layer neurons (301 to 303) to the second layer neurons (311 to 313).

In addition, each of the first layer neurons (301 to 303) which has input data obtained by dividing the target data to be subjected to feature extraction outputs a first value to each of corresponding one or more of the second layer neurons (311 to 313) which has the same expressed gene(s) as the expressed gene(s) included in the first layer neuron. The first signal value increases as the value of the input data increases.

In addition, each of the second layer neurons (311 to 313) calculates, as a feature quantity of the target data, the second signal value which is a value corresponding to the total sum of the first signal values input to the second layer neuron.

The feature extraction device 100 according to this embodiment may further include an expressed gene assignment unit 350 configured, for each of the first layer neurons (301 to 303) and the second layer neurons (311 to 313): (i) to select at least one gene from a gene repertory including a plurality of genes indicating predetermined attribute values; and (ii) to assign each of the selected at least one gene as the expressed gene. In this case, each of the first layer neurons (301 to 303) outputs the first signal value to only the second layer neuron(s) having the same expressed gene(s) as the expressed gene(s) included in the first neuron.

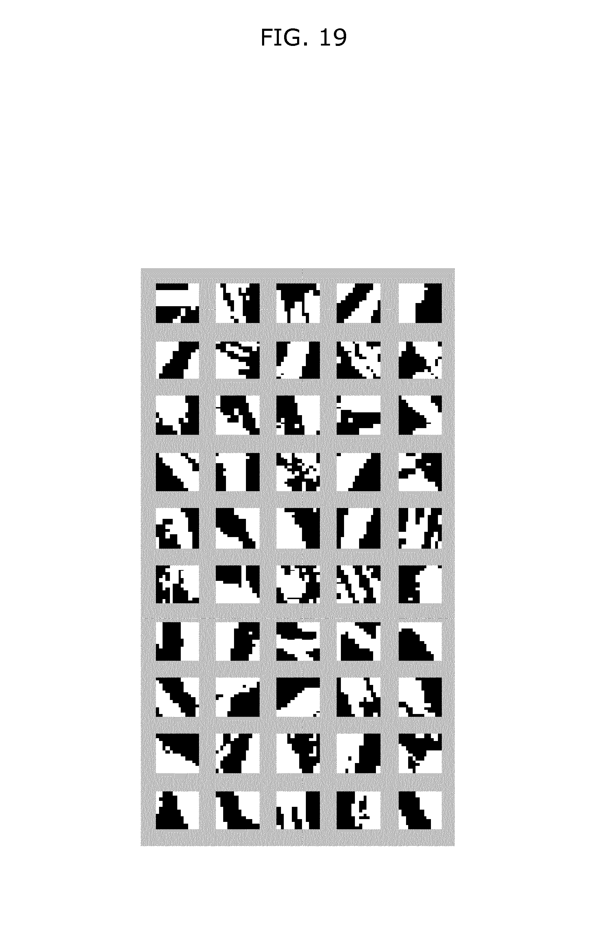

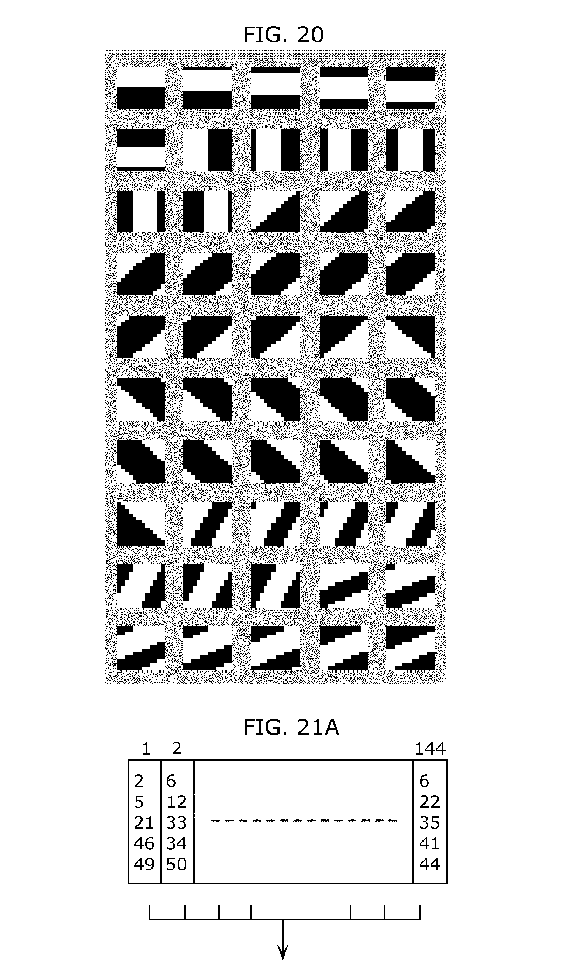

Here, the method of assigning expressed genes to the neurons performed by the expressed gene assignment unit 350 may be a method other than the aforementioned method for random selection. For example, it is also possible to define expressed genes corresponding to a known image as predetermined combinations of expressed genes as will be described with reference to FIG. 19 and FIG. 20, and to assign in order the predetermined combinations of expressed genes to the neurons.

In other words, the expressed gene assignment unit 350 may randomly select the gene(s) that should be assigned as the expressed gene(s) from the gene repertory or may select the gene(s) that should be assigned as the expressed gene(s) from predetermined combinations included in the gene repertory.

In addition, in the feature extraction device 100 according to this embodiment, each of the second layer neurons (311 to 313) may output a predetermined value as the second signal value when the total sum of the first signal values input to the second layer neuron is included in a predetermined range; and output, as the second signal value, a value different from the predetermined value when the total sum of the first signal values input to the second layer neuron is not included in the predetermined range.

In addition, the feature extraction device 100 according to this embodiment may further include a comparison unit 352 configured to output an activation instruction to each of neurons, among the plurality of neurons (311 to 313), which has a rank within a predetermined range in descending order of total sums of the first signal values input to the neurons. In this case, among the second layer neurons (311 to 313), (a) the neuron which has the activation instruction obtained from the comparison unit 352 outputs a predetermined value as the second signal value, and (b) the neuron which does not have the activation instruction obtained from the comparison unit 352 outputs, as the second signal value, the value different from the predetermined value.

In addition, in the feature extraction device 100 according to this embodiment, the hierarchical neural network may include, as third layer calculation units, a plurality of third layer neurons (321 to 323) each including at least one expressed gene. In this case, each of the second layer neurons (311 to 313) outputs the second signal value to each of corresponding one or more third layer neurons, among the third layer neurons (321 to 323), which has the same expressed gene(s) as the expressed gene(s) included in the second layer neuron, and each of the third layer neurons (321 to 323) calculates a third signal value which is a value corresponding to a total sum of a plurality of the second signal values input to the third layer neuron.

In addition, the feature extraction device 100 according to this embodiment may further include: a first comparison unit 352 which outputs an activation instruction to each of second layer neurons, among the second layer neurons (311 to 313), which has a rank within a predetermined range in descending order of total sums of the first signal values input to the second layer neuron; and a second comparison unit 354 which outputs an activation instruction to each of third layer neurons, among the third layer neurons (321 to 323), which has a rank within a predetermined range in descending order of total sums of the second signal values input to the third layer neuron.

In this case, among the second layer neurons (311 to 313), (a) the neuron which has the activation instruction obtained from the comparison unit 352 outputs the predetermined value as the second signal value, and (b) the neuron which does not have the activation instruction obtained from the comparison unit 352 outputs, as the second signal value, the value different from the predetermined value. Likewise, among the third layer neurons (321 to 323), (a) the neuron which has the activation instruction obtained from the comparison unit 354 outputs a predetermined value as the third signal value, and (b) the neuron which does not have the activation instruction obtained from the comparison unit 354 outputs, as the third signal value, a value different from the predetermined value.

In addition, the feature extraction device 100 according to this embodiment may further include: an expressed gene assignment unit 350 configured, for each of the first layer neurons (301 to 303), the second layer neurons (311 to 313), and the plurality of third layer neurons (321 to 323): (i) to select at least one gene from a gene repertory including a plurality of genes each indicating a predetermined attribute value; and (ii) to assign each of the selected at least one gene as the expressed gene; a first comparison unit 352 configured (i) to obtain a rank of each of the second layer neurons (311 to 313) based on a total sum of the first signal values input to the second neuron; and (ii) to output an activation instruction to each of second layer neurons, among the second layer neurons, which has a rank higher than or equal to a rank predetermined as a threshold value, a second comparison unit 354 configured: (i) to obtain a rank of each of the third layer neurons (321 to 323) based on a total sum of the second signal values input to the third neuron; and (ii) to output an activation instruction to each of third layer neurons, among the third layer neurons, which has a rank higher than or equal to a rank predetermined as a threshold value.

In this case, each of the first layer neurons (301 to 303) obtains the values of input data obtained by dividing a feature extraction target by the number of first layer neurons (301 to 303), and outputs the values of the input data as the first signal values to the second layer neurons (311 to 313) each including at least one same expressed gene included in the first layer neuron.

In addition, each of the first layer neurons (301 to 303) outputs 1 as the second signal value when the second layer neuron has the activation instruction obtained from the first comparison unit 352, and outputs 0 as the second signal value when the second layer neuron does not have the activation instruction obtained from the first comparison unit 352.

In addition, each of the third layer neurons (321 to 323) outputs 1 as the third signal value when the third layer neuron has the activation instruction obtained from the second comparison unit 354, and outputs 0 as the third signal value when the third layer neuron does not have the activation instruction obtained from the second comparison unit 354.

With the above-described structure, the expressed gene assignment unit 350 randomly assigns expressed genes to each of the neurons. Using the values of the expressed genes and the matching rules, combined states between the adjacent layers in the hierarchical neural network are determined (the combined states correspond to the matching network).

The matching network includes a function of calculating in parallel some of the five logical operations of AND, OR, NAND, NOR, and XOR, based on the activation criteria that the comparison units 352 and 354 use in their comparison processes for signal transmission between the adjacent layers.

Here, "parallel calculation" means, for example, each of the second layer neurons receives plural input values respectively from plural first layer neurons and performs a logical operation using the plural input values to obtain its output value, and the respective second layer neurons output their output values in parallel. In short, the logical operations are parallel logical operations which are executed in parallel on a plurality of inputs to the matching network. Accordingly, in order to differentiate these operations from conventional logical operations on two input values, an AND operation, an OR operation, a NAND operation, a NOR operation, and an XOR operation here are referred to as a parallel AND operation, a parallel OR operation, a parallel NAND operation, a parallel NOR operation, and a parallel XOR operation, respectively.

The column of feature quantities output in this way becomes a feature vector including, as extractions, features of the target data.

As a result, it is possible to obtain the feature quantities of the target data without performing any learning process using teacher signals which are essential in a conventional hierarchical neural network. As a result, it is possible to perform following processes such as a process of calculating the degree of similarity using the feature vector in which the obtained feature quantities are arranged.

This provides advantageous effects that there is no need to prepare a large amount of answer data as teacher signals and that long learning time is not required.

Since no learning is required, there are no possibilities that generalization performances are decreased due to overleaning and that a local solution is inevitably obtained. Thus, it is possible to exert stable feature extraction performances irrespective of the kinds of the target data.

The similar image search process by the feature extraction device 100 using the matching network has been described above.

A variation of the embodiment will be described next in which it is possible to search a dissimilar image by using the same matching network and only by changing activation criteria for use in comparison units.

### (Variation)

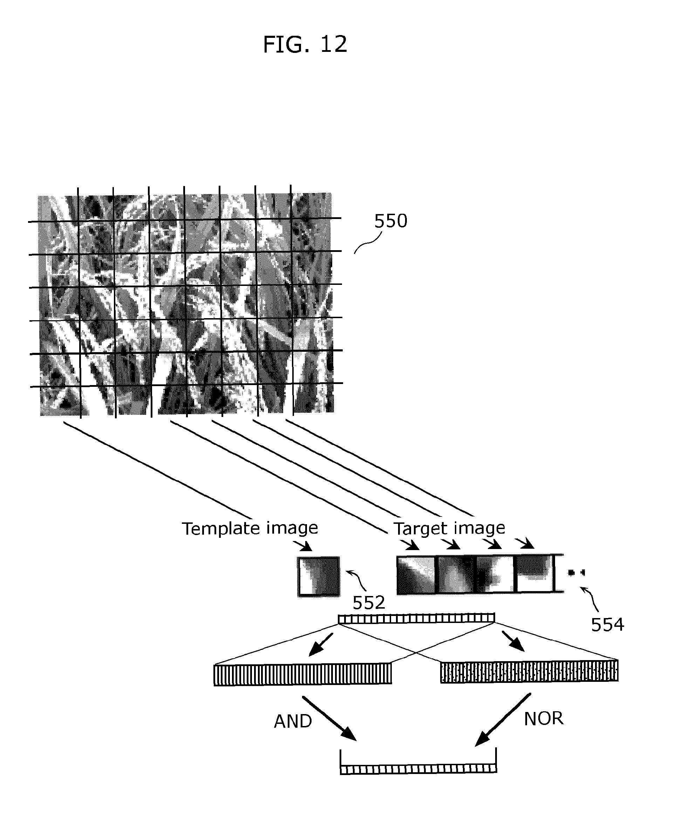

FIG. 12 is a schematic view of a dissimilar image search process performed by the feature extraction device 100 according to the variation of the embodiment.

As shown in FIG. 12, it is assumed here that an image which is not similar to a template image 552 (a dissimilar image) is searched out from among a plurality of target images 554.

Here, a template image 552 and the target image 554 are obtained by dividing an image 550 into predetermined blocks as in the embodiment described earlier.

In addition, a feature extraction device 100 in this variation has the same structure as in the embodiment shown in FIG. 6, and thus no detailed description thereof is repeated.

In this variation, the comparison units 352 and 354 perform a parallel AND operation when the target data is the template image 552 in order to obtain a feature vector including, as extractions, features of the target data. In other words, the comparison units 352 and 354 transmit activation instructions to the neurons within the top 10%.

On the other hand, the comparison units 352 and 354 perform parallel NOR operations for each of the target images 554 in order to obtain a feature vector including, as extractions, features different from the features of the target images 554. In other words, when the target data is of the target images 554, the comparison units 352 and 354 transmit activation instructions to the neurons within the bottom 10%.

Finally, an inner product is calculated which is between the feature vector of the template image 552 output from the feature extraction device 100 and the feature vector of each of the template images 554.

The resulting inner product value is a score indicating the degree of dissimilarity. It can be determined that an image having a larger inner product value has a higher degree of dissimilarity with the template image 552.

In other words, the feature extraction device 100 according to this variation further includes: an expressed gene assignment unit 350 configured, for each of the first layer neurons (301 to 303), the second layer neurons (311 to 313), and the third layer neurons (321 to 323): (i) to select at least one gene from a gene repertory including a plurality of genes each indicating a predetermined attribute value; and (ii) to assign each of the selected at least one gene as the expressed gene; a first comparison unit 352 configured (i) to obtain a rank of each of the second layer neurons (311 to 313) based on a total sum of the first signal values input to the second neuron; and (ii) to output an activation instruction to each of second layer neurons, among the second layer neurons, which has a rank lower than or equal to a rank predetermined as a threshold value, a second comparison unit 354 configured: (i) to obtain a rank of each of the third layer neurons (321 to 323) based on a total sum of the second signal values input to the third neuron; and (ii) to output an activation instruction to each of third layer neurons, among the third layer neurons, which has a rank lower than or equal to a rank predetermined as a threshold value.

In this case, each of the first layer neurons (301 to 303) obtains the values of input data obtained by dividing a feature extraction target by the number of first layer neurons (301 to 303), and outputs the values of the input data as the first signal values to the second layer neurons (311 to 313) each including at least one same expressed gene included in the first layer neuron.

In addition, each of the second layer neurons (311 to 313) outputs 1 as the second signal value when the second layer neuron has the activation instruction obtained from the first comparison unit 352 and to output 0 as the second signal value when the second layer neuron does not have the activation instruction obtained from the first comparison unit 352.

In addition, each of the third layer neurons (321 to 323) outputs 1 as the third signal value when the third layer neuron has the activation instruction obtained from the second comparison unit 354 and to output 0 as the third signal value when the third layer neuron does not have the activation instruction obtained from the second comparison unit 354.

With this structure, it is possible to output, as a feature vector, features other than the features of the target data by selectively activating neurons each having a relatively small input value transmitted from the upper layer in signal transmission between the first layer and the second layer and the upper layer in signal transmission between the second layer and the third layer.

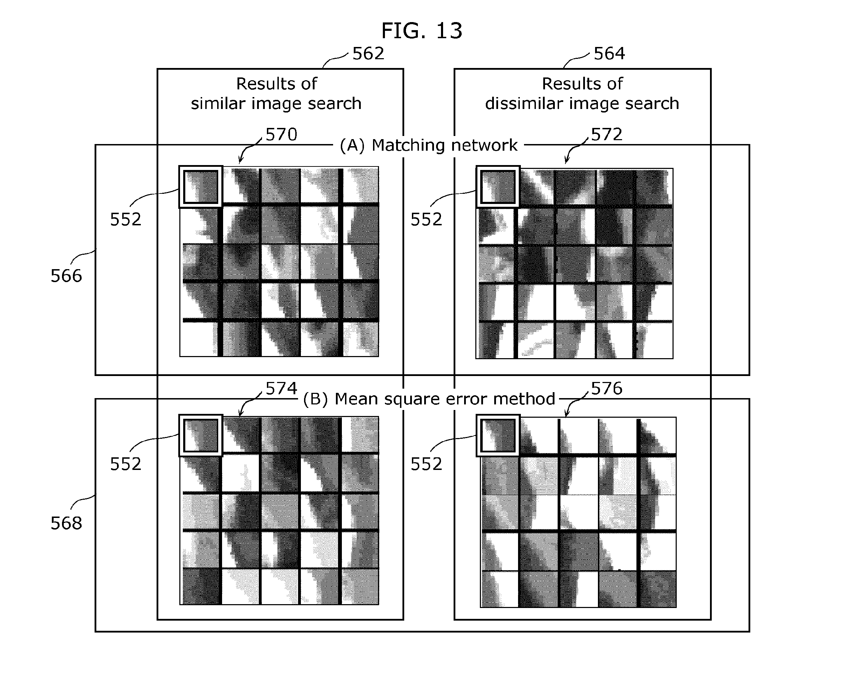

FIG. 13 is a diagram showing examples of results of similar image searches and dissimilar image searches performed by the feature extraction device 100 according to the embodiment and this variation.

The search result 570 shown in FIG. 13 is a result of searching a similar image using the feature extraction device 100 according to the embodiment. The upper left block among the blocks included in the search result 570 is a template image 552. The remaining twenty four blocks are target images having a similarity degree score ranked within the top twenty four searched out from among the target images 554.

In addition, for comparison in performance, a search result 574 is shown which is a result of searching out an image similar to the template image 552 from among the target mages 554 according to a mean square error method. In the mean square error method, a square value (a mean squared error) of a difference between pixel values is calculated for each of pixels at corresponding positions using a template image 552 and a target image. Subsequently, the total value of mean squared errors of all the pixels is calculated. An image having a smaller total value is determined to be an image more similar to the template image 552, and an image having a larger total value is determined to be an image more dissimilar to the template image 552.

Comparison between the search result 570 and the search result 574 shows that the search result 570 obtained in the case of using the feature extraction device 100 compares favorably to the search result 574 obtained using a mean square error method.

This result shows that similar image searches are possible by using feature vectors output from the feature extraction device 100.

In addition, the search result 572 shows the result of searching out a dissimilar image using the feature extraction device 100 according to this variation. The upper left block is a template image 552. The remaining twenty four blocks are target images having a dissimilarity degree score within the top twenty four searched out from among the target images 554.

Furthermore, as in the case of the similar image search, for comparison in performance, the search result 576 shows a result of searching out, using a mean square error method, an image dissimilar to the template image 552 from among the target images 554.

Comparison between the search result 572 and the search result 576 obtained using the mean square error method shows that the search result 576 in the case of using the mean squared error includes a greater number of images having contrast opposite to the contrast of the template image 552. On the other hand, the comparison shows that the search result 572 in the case of using the feature extraction device 100 includes various images different from the template image 552 in addition to such images simply having contrast opposite to the contrast of the template image 552. In other words, it is considered that the feature extraction device 100 can properly extract, as feature vectors, not simple "opposite pixel values" but "features not included in the template image 552".

The search result 572 including various kinds of dissimilar images is closer to search results of "images dissimilar to the template image 552" that people imagine generally.

This result shows that dissimilar image searches are possible by using feature vectors output from the feature extraction device 100 according to this variation.

As described above, it is possible to select a kind of parallel logical operation to be performed by the matching network by means of the comparison units selecting the activation criteria for use in comparison processes without changing the structure of the matching network. As a result, it is possible to extract the features of the target data and to extract the features different from the features of the target data using the same feature extraction device 100.

In addition, since there is no need to change the structure of the matching network depending on the kind of logical operation, it is only necessary that the activation criteria for use in the comparison units are changed without the need to perform processes such as a process of re-generating a matrix due to changes of processing details. This makes it possible to increase the processing efficiency.

It is to be noted that target data from which features can be extracted by the feature extraction device 100 according to the embodiment and this variation is not limited to such image data. Any data composed of discrete numerical values can be input data. Examples of such arbitrary input data includes waveform data, binarized transaction data, and data obtained by sensing etc.

It is to be noted that output from the intermediate layer and the output layer included in the feature extraction device 100 according to the embodiment and this variation may be values other than binary values of "0" and "1". For example, in the case of the feature extraction device 100 including a three-layer matching network, each of the neurons in the second layer which is the intermediate layer and in the third layer which is the output layer may output a total sum of input signal values. Alternatively, each of neurons having an activation instruction among the neurons in the second layer which is the intermediate layer and the third layer which is the output layer may output the total sum of the input second signal values. In addition, each of the neurons in the second layer which is the intermediate layer and in the third layer which is the output layer may output an arbitrary constant A when the total sum of the input signal values is equal to or smaller than a predetermined threshold value and otherwise may output a constant B other than the constant A.

In other words, each of the neurons in the intermediate layer and the output layer may be a calculation unit which outputs a value corresponding to the total sum of the input signal values.

In addition, the first layer (input layer) may, for example, binarize each of the values of input data into 0 or 1 instead of outputting the raw values of the input data. More specifically, it is also good to determine a threshold value in advance, and to output 1 when the value is larger than or equal to the threshold value and output 0 when the value is smaller than the threshold value. In other words, each of the neurons in the input layer may be a calculation unit which outputs a first signal value that increases with increase in the value of the input data.

It is to be noted that each of the comparison units 352 and 354 according to the embodiment and this variation may output a non-activation instruction for bringing neurons which do not satisfy a criterion into a non-activated state. For example, each neuron may enter into an activated state in response to an activation instruction, and may return back to a non-activated state in response to a non-activation state. Alternatively, the comparison units 352 and 354 may output a non-activation instruction to each of the neurons and initialize the neuron into a non-activated state each time the feature extraction device 100 obtains new target data. Furthermore, activated neurons may gradually transit into a non-activated state as time elapses. In this case, it is conceivable that the output values from the neurons are made smaller as the transition into a non-activation state progresses.

It is to be noted that each neuron in a non-activated state does not need to output "0" among the neurons in the intermediate layer and in the output layer according to the embodiment and this variation. In other words, each neuron in an activated state may output "1" and the others may do nothing among the neurons in the intermediate layer and in the output layer. In this case, for example, it is possible to secure, in advance, a bitstream corresponding to an output by each neuron as a memory area for obtaining the output by the neuron, and to initialize each bit into "0" in advance, and to thereby obtain, as a feature vector, a bitstream which is equivalent to the bistream obtainable in the case where a neuron in a non-activated state outputs "0".

It is to be noted that the feature extraction device 100 according to the embodiment and this variation does not always include comparison units. For example, each neuron may select its output by comparing the total value of the inputs with a criterion based on an absolute value (that is, a predetermined threshold value), instead of a relative rank in the layer. In addition, without comparison units, the neurons in the layer may communicate their total values of input values with each other, and may thereby obtain their relative ranks based on the total values of the input values.

It is to be noted that random numbers for use by the expressed gene assignment unit 350 according to the embodiment and this variation may be random numbers produced using random number generator or the like, or pseudo random numbers produced by calculation processes. As mentioned earlier, the number of genes included in a gene repertory is approximately one hundred at most. Accordingly, such random numbers are easily generated, and are used sufficiently even when the random numbers are cyclical.

It is to be noted that the feature extraction device 100 according to the embodiment and this variation forms signal paths between an upper layer and a lower layer when at least one same expressed gene is included in both the upper layer and in the lower layer in the generation of a connection matrix. However, for example, it is also good to form signal paths only when at least two expressed genes are included in both the upper layer and in the lower layer. Alternatively, when at least two expressed genes are included in both the upper layer and in the lower layer, it is also good to multiply weights according to the number of genes to signal values to be output through the signal paths.

It is to be noted that the activation criteria for use by the comparison units 352 and 354 according to the embodiment and this variation may be different from each other. For example, the comparison unit 352 may execute a parallel AND operation in signal transmission between the first layer and the second layer, and the comparison unit 354 may execute a parallel NOR operation in signal transmission between the second layer and the third layer. In a more generalized manner, the activation criteria for use in the respective layers may be different from each other in the case of a four-layer matching network.

It is to be noted that the numerical values used as activation criteria by the comparison units 352 and 354 according to the embodiment and this variation may be specific examples. Accordingly, other numerical values can be used as long as the numerical values maintain a large-small relationship.

It is to be noted that the feature extraction device 100 according to the embodiment and this variation use the same gene repertory for all the layers. However, the expressed gene assignment unit 350 may assign expressed genes to the neurons using gene repertories different for the respective layers.

The feature extraction device 100 according to the embodiment and this variation may include the comparison units respectively in the second and third layers. This merely shows that it is possible to conceive such comparison units logically corresponding to the respective layers. Accordingly, the feature extraction device 100 may include a single comparison unit as a whole, and the comparison unit may perform comparison processes for all the layers.

It is to be noted that determinations on the similarities of feature vectors may be made based on values other than inner products. In general, any processes for extracting the degree of matching between two feature vectors are possible. For example, a mean squared error between two feature vectors is possible. In addition, it is also good to simply calculate the number of matching elements among the elements included in the feature vectors.

The hierarchical neural network included in the feature extraction device 100 according to the embodiment and this variation is intended for signal transmission between adjacent layers in one direction from an upper layer to a lower layer in the above description. However, the neural network is an exemplary non-limiting one. It is also good to transmit signals form a lower layer to an upper layer, or to transmit signals from a neuron to another neuron in the same layer as necessary.

In addition, in the embodiment and this variation, the neural network included in the feature extraction device has been described assuming that the neural network is a hierarchical network having a hierarchical structure. However, a neural network which does not have a hierarchical structure is possible. For example, a hop-field network for mutual combination is possible. This is because the essence of the present invention lies in transmitting signals between neurons according to a matching rule.

Accordingly, the feature extraction device may be a feature extraction device including a neural network and including a plurality of neurons which are calculation units, each of the neurons may include at least one expressed genes which is an attribute value for determining whether or not signal transmission from one of the neurons to an other one of the neurons is possible, among the neurons, each of first neurons which has input data obtained by dividing target data subjected to feature extraction may output a first signal value which is larger as the value of the input data is larger to corresponding second neurons each including at least one same expressed gene as the expressed gene included in the first neuron, and each of the second neuron may calculate, as a feature quantity of the target data, a second signal value which is a value corresponding to the total sum of input first signal values input to the second neuron.

It is to be noted that any conventional artificial neural network cannot integrate information processing capabilities even when combining a plurality of networks learned separately. On the other hand, even when the matching networks are networks generated independently, it is possible to combine or connect the matching networks to each other for extension according to matching rules, and to integrate the pieces of information processed by the separate networks. More specifically, with reference to FIG. 12, a network is possible which includes the following networks generated independently: a second-layer matching network (for executing parallel AND processing) for processing the template image 552; and a second-layer matching network (for executing parallel NOR processing) for processing the target images 554. More specifically, the expressed genes assigned to the neurons may be different between the matching network for performing the parallel AND processing and the matching network for performing the parallel NOR processing. However, at this time, the expressed genes (specifically, the numbers of the expressed genes) assigned to the input data obtained by dividing the target data subjected to the feature extraction must be common, and thus the input layer (the first layer) must be common.

The five parallel logical operations shown in FIG. 11 are examples of operation processes performed by the matching network. For example, output may be performed according to another rule such as "Neurons within the top 10% output 2, the neurons other than the neurons within the top 10% among the neurons within the top 50% output 1, the neurons other than the neurons within the top 50% among the neurons within the top 80% output 0, and the remaining neurons output -1.".

Here, although the matching network enables feature extraction without any leaning process, it is also possible to use connection matrices as weighted matrices and change the values through learning.

Here, it is considered that such feature extraction using the matching network is possible because the matching network generated according to the matching rule has small-worldness in graph theory. This is described in detail below.

The matching rule has been conceived based on the fact that approximately sixty kinds of sub-types make up a gene cluster in a cluster Proto-cadherin (cPcdh) which is a cell adhesion molecule group discovered by the Inventors of the present invention, and random combinations of these sub-types express in the neural cells.

Based on this discovery, the Inventors establish a hypothesis that information processing in a brain is performed in the form of a simultaneous parallel processing in a plurality of networks which connect the cells in which the same proto-cadherin molecule seed (the expressed gene in the embodiment) express. Based on the hypothesis, the Inventors have made the feature extraction device including a matching network.

Simulations have shown that this matching network has the following features in the graph theory.

### (1) Short distance between vertices

When arbitrary two nodes in a network are connected via a small number of intermediate nodes, the network has a short distance between the vertices. In other words, the average distance between the arbitrary nodes is small.

### (2) High clusterness

When two nodes connected to a node are also connected to each other, the network has a high clusterness. In other words, the network includes a triangle network composed of the three nodes.

The aforementioned matching network has almost the same distance between vertices as in a random network which is a representative network having a short distance between vertices, but has a clusterness much higher than in the random network.

Such a high clusterness is desirable for a process of extracting combinations in feature extraction. For example, a matching network which connects an input layer including a small number of neurons and an intermediate layer including a large number of neurons is capable of widely dispersing the values of the input data input in the input layer to the neurons in the intermediate layer. On the other hand, a matching network which connects an intermediate layer including a large number of neurons and an output layer including a small number of neurons is capable of generating a feature quantity by integrating, into the output layer, outputs resulting from the input data dispersed to the intermediate layer. Accordingly, it is possible to detect effective combinations.

In addition, a short distance between vertices shows that a large number of clusters are not independent and are connected to each other. Accordingly, the target data provides various kinds of feature quantities by means of fair combinations being extracted in transmission from the intermediate layer to the output layer. In particular, a conspicuous effect is considered to be obtained when the number of intermediate layers is large. Accordingly, for example, as shown by the results of dissimilar image searches in FIG. 13, it is considered to be able to output feature vectors of images "which are different in various kinds of viewpoints" from the template image 552.

Here, it is also possible to adjust "scale-freeness" in the graph theory field by varying the numbers of expressed genes to be assigned to the neurons.

As described above, the feature extraction device 100 according to the embodiment and this variation is a feature extraction device intended to generate, on a computer, a matching network having a unique property that is small-worldness, and use the matching network.

In addition, the matching network further has a property of being easy to maintain the characteristics of pieces of information input in each layer even when the number of layers is increased.

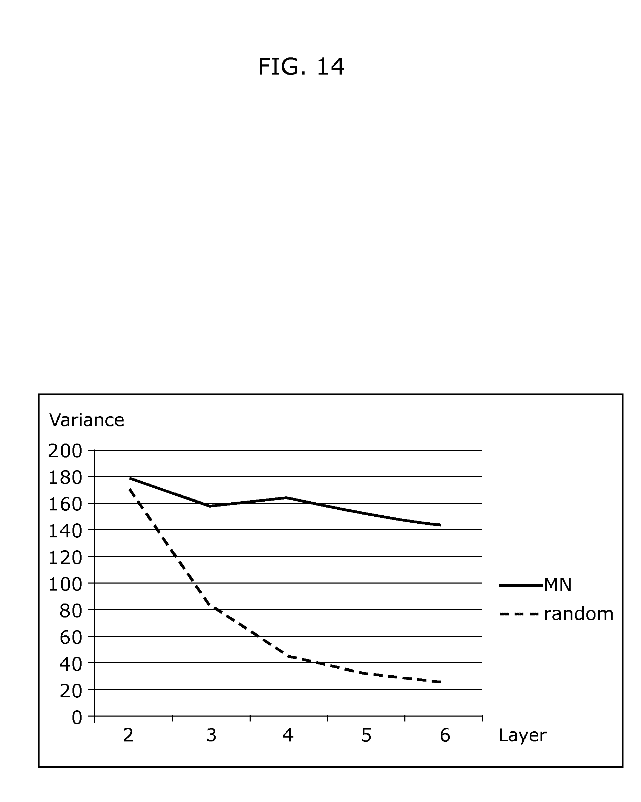

FIG. 14 is a diagram showing the relationship between the number of layers and maintained information in each of the matching network (MN) and the random network (random). The vertical axis shows the conspicuity of response characteristics of each of the neurons. As the value increases, the respective neurons return more different responses due to the characteristics of the images presented in the layer. This shows that each of the neurons has a favorite image. The horizontal axis shows the number of hierarchical layers.

As shown in FIG. 14, the neurons in the random network lose response characteristics as the number of hierarchical layers is increased. This means that an activity of a neuron does not show characteristics of a presented image. On the other hand, in the matching network, the response characteristics of neurons do not decrease so much even when the number of hierarchical layers is increased. Thus, it can be said that information indicating characteristics of images presented in the layer are maintained.

This is possible because the information is represented using later-described gene codes in the matching network. This provides an advantageous effect of being able to easily combine neurons in different hierarchical layers. This is a significant advantage in realizing multi-modal information processing.

In this way, such characteristics of being less vulnerable to information loss in the case of stacked layers provide the following advantageous effects.

First, an advantageous effect provided is that performance decreases less when an output from a lower layer is returned back to an upper layer in information processing. In information processing, for example, a result of processing by a layer needs to be saved for a while and to be used later. In this case, it is possible to temporarily save the information desired to be used later by keeping the information transmitted between layers until the information is used, without requiring any semiconductor memory or the like. In this way, it is possible to reduce the size of the information processing device, and reduce the cost and save energy for the information processing device. Furthermore, this eliminates the need for the information processing device to manage a memory area such as garbage collection.

In addition, in the matching network, it is easy to combine different neuron codes (that are, activated neuron numbers) of neurons between hierarchical layers. This property of the matching network provides the following advantageous effect.

First, the matching network enables easy formation of various kinds of logical circuits. For example, as shown in FIG. 11, each of the layers forms a logical element. More specifically, each of the layers is the parallel logical element. In addition to this, the matching network includes a high information maintenance capability as shown in FIG. 14.

Although each of the logical elements can have only a simple function, but it is possible to form a complicated logical circuit by combining such logical elements in series or in parallel in several stages. More specifically, it is possible to configure a complicated circuit such as a comparator by combining simple AND and NAND circuits, as in a general digital logical circuit. This is possible on a premise that information is stably transmitted between such elements. This is secured by the information maintenance capability of the matching network shown in FIG. 14.

In other words, the respective layers in the hierarchical matching network are parallel logical elements, which provide an advantageous effect of being able to form various kinds of logical circuits by combining these parallel logical elements.

This is also an advantage in realizing multi-modal information processing.

A more specific description is given below taking an example of control by a working robot. With reference to FIG. 6 again, it is assumed that input data A, input data B, and input data C are data output by sensors corresponding to visual sense, auditory sense, and touch sense of the working robot.

In order to allow the robot to perform operations correctly, the robot needs to recognize the environments by integrating the data respectively output by the sensors corresponding to the visual sense, auditory sense, and touch sense as in the case of a human being. Accordingly, for example, when a second layer neuron 311 receives inputs from a first layer neuron 301 and a first layer neuron 302, a second layer neuron 312 receives inputs from the first layer neuron 302 and the first layer neuron 303, and a second layer neuron 313 receives inputs from the first layer neuron 303 and the first layer neuron 301, none of the second layer neurons receives the three data items of input data A to C. Thus, none of the neurons included in the second layer and the upper layer cannot perform any process of combining all the pieces of information output from the sensors. However, in the third layer, a third layer neuron 321 for example receives inputs from the second layer neuron 311 and the second layer neuron 312, the third layer neuron 321 can perform processing with reference to all of the three input data A to C. In this way, it is possible to increase a probability that a neuron can perform processing based on all the pieces of information output from the sensors by adding the third layer (or the fourth layer etc.). Accordingly, the property of being able to increase combinations between hierarchical layers is essential for a matching network to realize multi-modal information processing.

Properties of the matching network have been described above focusing on neurons. Next, focusing on genes, properties of the matching network are described below. More specifically, expressed genes included in activated neurons are focused on.

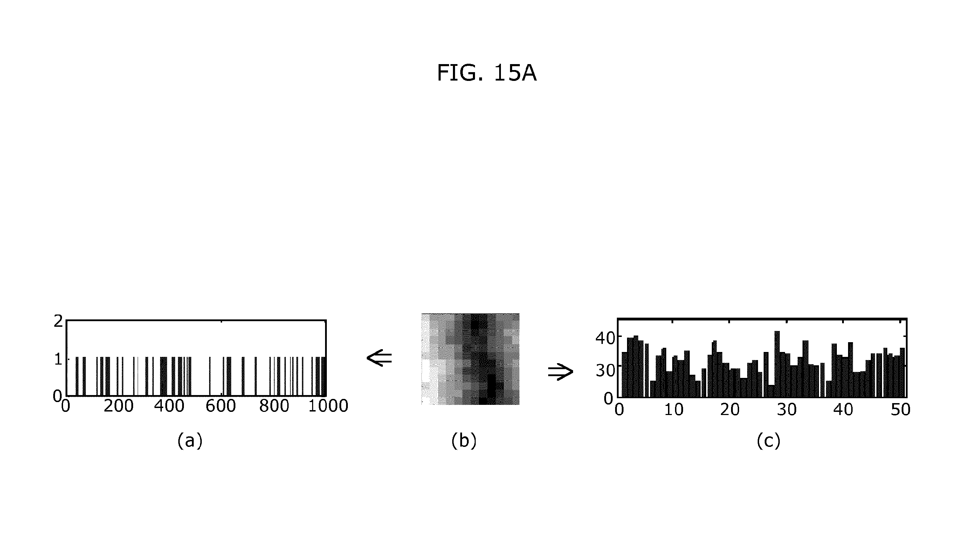

FIGs. 15A to 15C show results of extracting features of three different images using the matching network. More specifically, (a) of FIG. 15A shows neuron codes (activated neuron numbers) obtained by inputting an image shown in (b) of FIG. 15A to the matching network. On the other hand, (c) of FIG. 15A is a graph shown as a histogram of the gene codes of genes activated when the image shown in (b) of FIG. 15A is input to the matching network. In other words, the gene codes are pieces of information indicating a frequency distribution of the expressed genes in the form of a vector in which the number of elements is the number of genes in a gene repertory. Here, the frequency of an expressed gene is determined for each of a plurality of neurons such that the frequency of the expressed gene included in the neuron (that is, the expressed gene is assigned to the neuron) increases as the number of signal values input from one of the neurons to the current neuron according to the matching rule. This means that an expressed gene included in a neuron having a larger number of input first signal values has a greater influence.

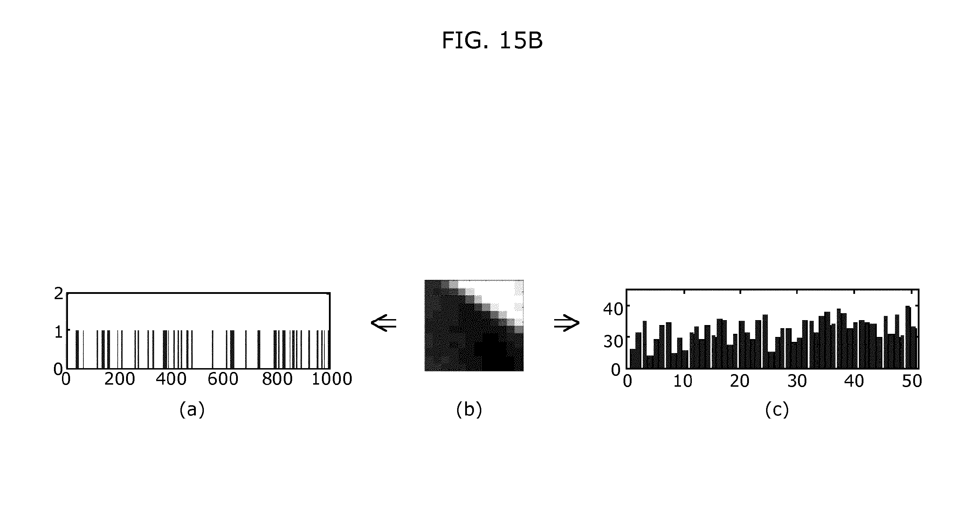

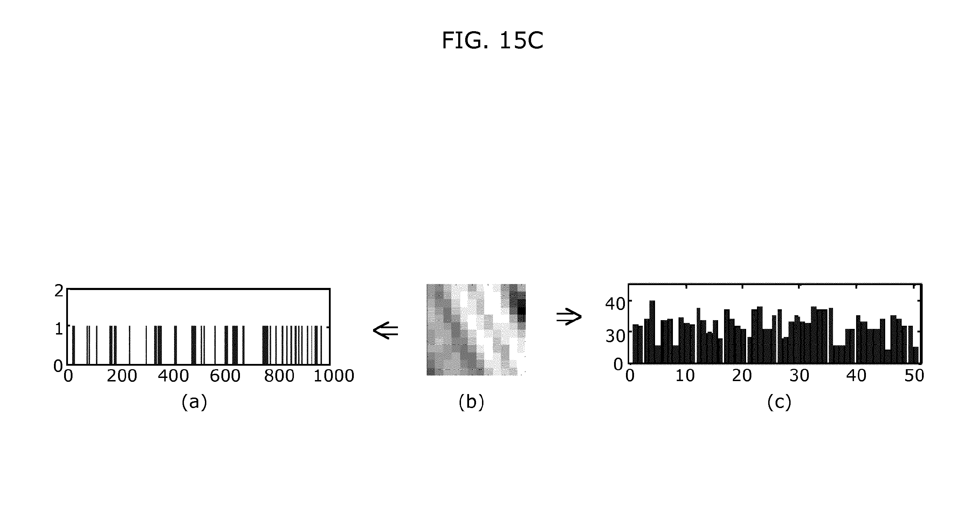

Each of (a) of FIG. 15B and (a) of FIG. 15C shows neuron codes obtained by inputting images shown in (b) of FIG. 15B and (b) of FIG. 15C in the matching network. In addition, each of (c) of FIG. 15B and (c) of FIG. 15C is a graph shown as a histogram of the gene codes of genes activated when corresponding ones of the images shown in (b) of FIG. 15B and (b) of FIG. 15C are input to the matching network.

In other words, it can be considered that each of the histograms of gene codes shown as (c) of FIG. 15A, (c) of FIG. 15B, and (c) of FIG. 15C shows the feature quantities of the images shown as a corresponding one of (b) of FIG. 15A, (b) of FIG. 15B, and (b) of FIG. 15C.

In this way, when the matching network is considered focusing on the gene codes, it is possible to consider that information processing performed by the matching network is processing of outputting the degrees of similarity between a plurality of gene code groups and given pieces of data.

More specifically, the matching network provides the advantageous effect of having two kinds of information code formats of neuron codes and gene codes as shown in FIG. 15A to FIG. 15C. Hereinafter, FIG. 15A to FIG. 15C may be referred to as FIGs. 15A to 15C.

Each of FIGs. 15A to 15C shows an example of a matching network including a gene repertory made up of 50 genes. As shown in (c) of FIG. 15, the gene codes are represented as a vector in which the number of elements is the number of genes in the gene repertory.

Activities of neurons as shown in (a) of FIG. 15 are directly shown as outputs from the layers, and are equivalent to the gene codes (the total of genes included in the activated neurons) in (c) of FIG. 15.

The neuron codes in (a) of FIG. 15 takes a value which is different for each layer or for a matching network to be used even in the case of a same image. In other words, the neuron numbers of neurons to be activated are different between layers even in the case of the same image.

On the other hand, the gene codes in (c) of FIG. 15 take very close values even in the case of different layers, or different matching networks (as long as the gene repertory is the same).

In other words, the gene codes are unique values for representing the image.

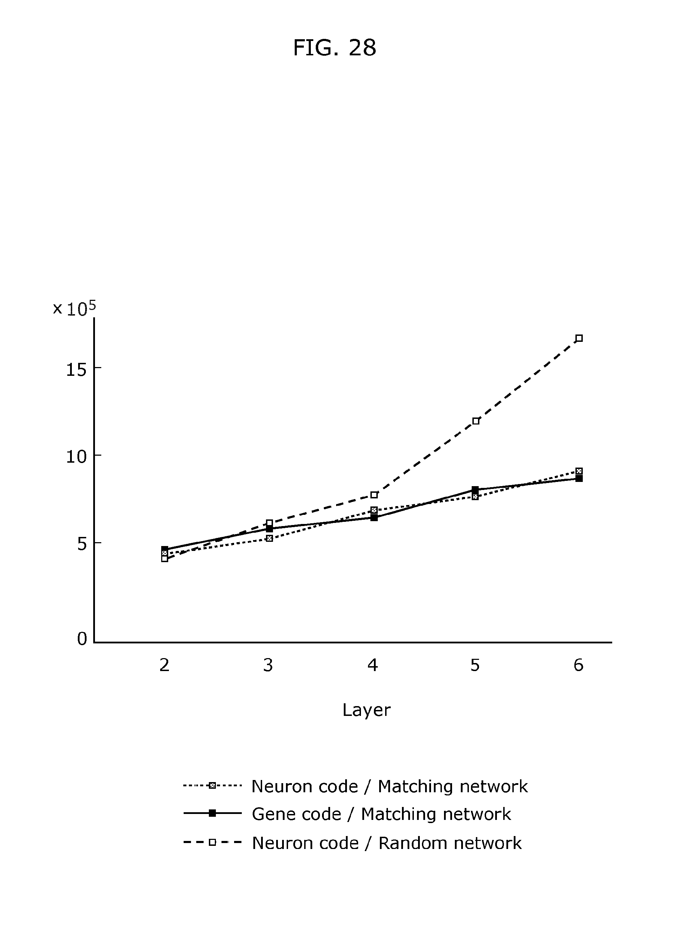

In fact, as shown in FIG. 28, it is possible to obtain similar performance results in similar image searches each performed using the neuron codes or gene codes.

In addition, as shown in FIG. 12, the matching network has a high integrity because it transmits common gene codes. The matching network transmits the unique values of gene codes corresponding to pieces of information (here, an image), utilizing the activities of the neurons.

Accordingly, each of the layers in the matching network can be considered as a logical element which transforms gene codes.

In each of the dissimilar image searches shown in FIG. 12 and FIG. 13, a NOR element transforms each gene code into a totally dissimilar pattern, and searches for an image having such a gene code.

In this way, the matching network is capable of transforming a mere activity (neuron code) of each neuron into a unique vector (gene code).

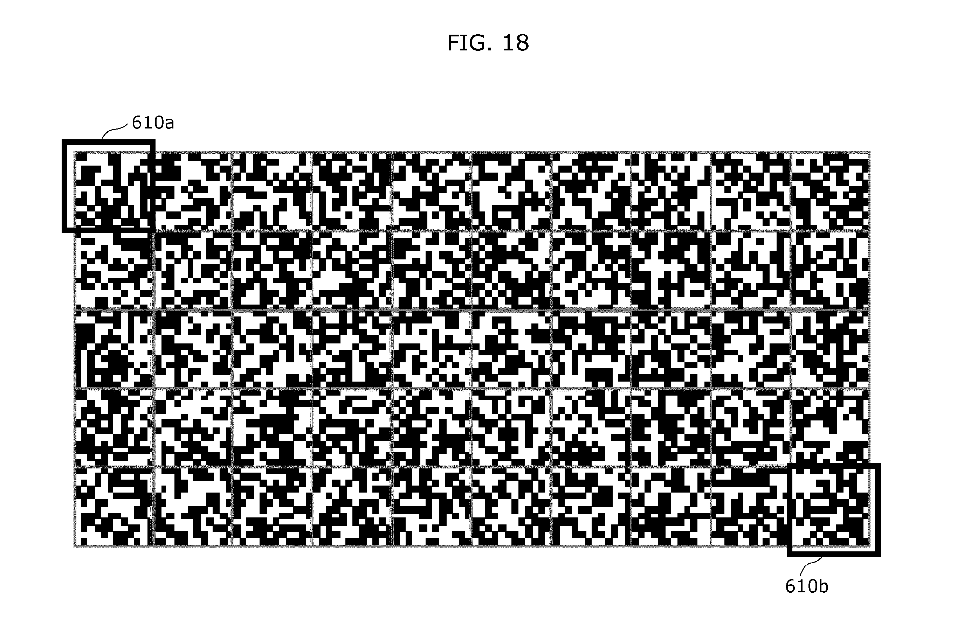

In addition, each of the genes represents a unique pattern (prototype) as shown in FIG. 18 to FIG. 20.

However, the gene code is intended to explicitly represent, for each of the images, which prototype or which combination of prototypes is similar to the image, and how much the degree of similarity is.

On the other hand, by intentionally manipulating the gene codes, it is possible to perform the opposite operation for selecting a piece of information similar to a certain kind of prototype.

In this way, the gene codes provide a possibility that the unconventional operation is performed.

In other words, the feature extraction device 100 according to the present invention is a feature extraction device which determines, for each of the second neurons, the frequency of each of the expressed genes included in the second neuron such that the frequency increases with increase in the number or the magnitudes of first signal values input to the second neuron, and outputs, as the features of the target data, gene codes which are information indicating a distribution of sums of frequencies of the expressed genes, each sum being a sum of frequencies of a corresponding one of the expressed genes included in some of the plurality of second neurons.

More specifically, for example, the feature extraction device 100 may determine, for each second neuron, the frequencies of the expressed genes included in the second neuron as the number of first signal values input to the second layer. For example, when a given neuron includes three expressed genes represented by 2, 4, and 7, and each of the neurons receives ten signal values from another one of the neurons, the frequencies of the expressed genes denoted as 2, 4, and 7 included in the given neuron are determined to be ten. This value is summed up for each of the second neurons, and the frequency distribution for each gene is generated.

In addition, the feature extraction device 100 determines, for each of the second neurons, whether or not the number or the magnitudes of first signal values input to the second neuron is greater than or equal to a threshold value, and determines the gene codes as the frequencies of the expressed genes included in the second layer neuron having first signal values in number greater than or equal to the threshold value.

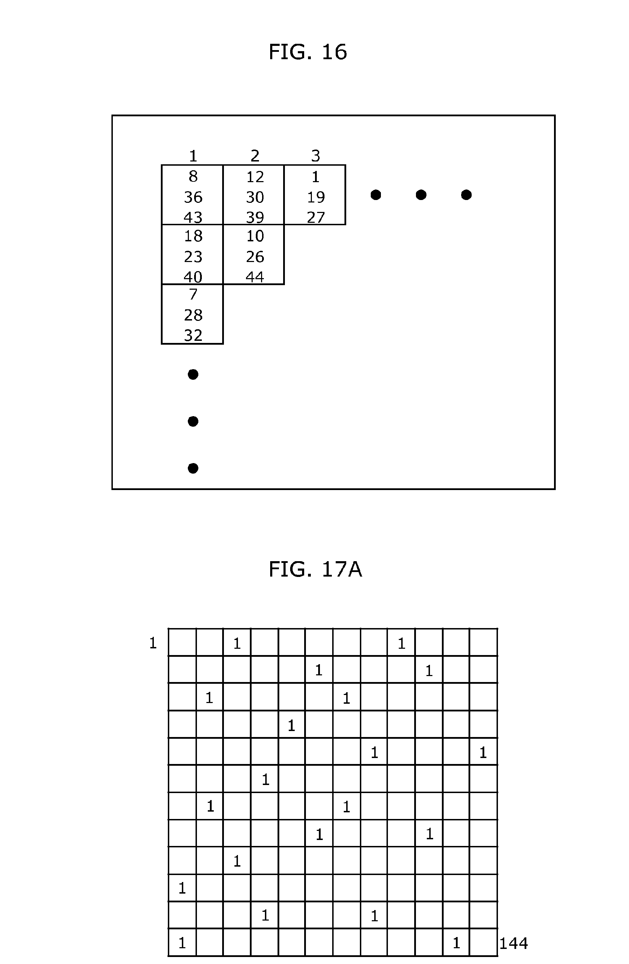

This is described in detail below with reference to FIG. 16 to FIG. 18.

FIG. 16 is a diagram of a matrix of 12 x 12 segments of gene codes included in each of one hundred and four first layers. A first segment includes 8, 36, and 43. This shows that the gene codes included in the first neuron among the one hundred and four first layer neurons are 8, 36, and 43.

FIG. 17A is a diagram in which each of segments including a gene code of "1" in FIG. 16 is assigned with "1", and the other segments are empty. Among the one hundred and four first layer neurons shown in FIG. 17A, the upper left segment corresponds to the first neuron among the first layer neurons, and the lower right segment corresponds to the one hundred and fourth neuron among the first layer neurons.

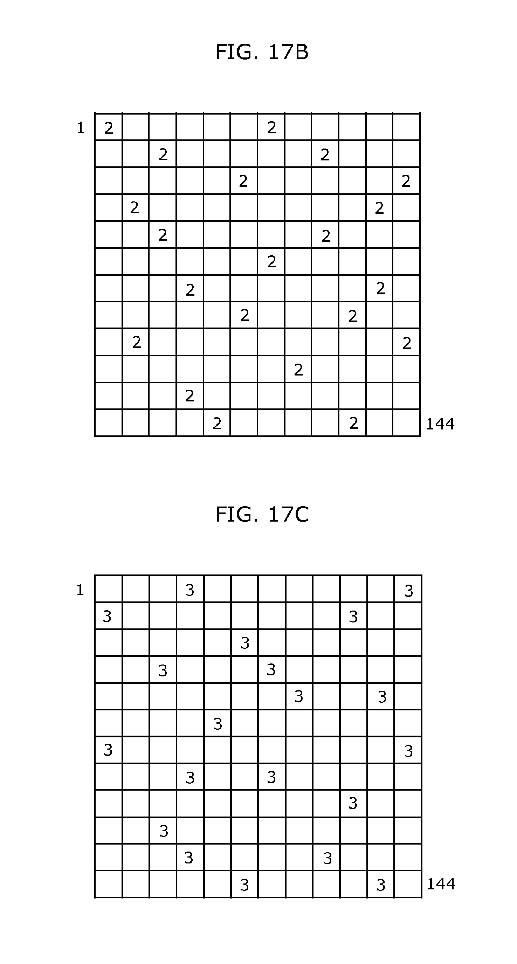

Likewise, FIG. 17B is a diagram in which each of segments including a gene code of "2" in FIG. 16 is assigned with "2", and the other segments are empty. Likewise, FIG. 17C is a diagram in which each of segments including a gene code of "3" in FIG. 16 is assigned with "3", and the other segments are empty.

In this way, in the case where gene codes 1 to 50 are present, a total of fifty images are generated for the respective gene codes 1 to 50. In each of the images, segments which do not include the corresponding gene code are empty. Furthermore, FIG. 18 shows the obtained fifty images arranged in a matrix of 5 images x 10 images. In each of the images, the segments (having assigned gene codes) other than the empty segments are painted black. In other words, FIG. 18 provides images showing a list of patterns of gene codes in the first layer of a given matching network.

For example, the upper left segment 610a is an image in which a neuron including a gene code "1" is visualized among one hundred and four neurons. In addition, the lower right segment 610b is an image in which a neuron including the gene code "50" is visualized. Hereinafter, an image which is shown as an image in the matrix in FIG. 18 and in which a neuron including a particular gene code is visualized is referred to as a prototype image.

In the matching network used in the generation of the images in FIG. 18, expressed genes are randomly assigned to the neurons, and thus each of the prototype images in which the gene codes are visualized shows a random pattern.

It can be considered that the matching network performs a process of calculating the degrees of contribution (weights) of the respective prototype images when the input data is represented as combinations of the fifty prototype images as shown in FIG. 18. In other words, the feature extraction process performed by the matching network is a process of determining the combinations of the known prototype images in such a manner that the input data can be represented effectively.

Accordingly, gene codes may be determined differently than randomly. In other words, the expressed gene assignment unit 350 does not need to always randomly assign expressed genes to the neurons.

For example, FIG. 19 is images obtained by binarizing arbitrarily selected fifty images. Experiments performed by the Inventors showed that similar image searches can be performed with high precisions even in the case of the matching network which generates prototype images by binarizing other images in the aforementioned manner and assigns expressed genes corresponding to the prototype images to the neurons.

Furthermore, it is also possible to use artificial patterns as shown in FIG. 20 as prototype images.

The functions of the matching network for representing new inputs as combinations of known patterns can be used, for example, in data mining etc. targeting user preference in marketing. Hereinafter, a specific description is given assuming a scenario for developing a new tea product.

### (Step 1)

First, each of one hundred and four evaluators is asked to drink known fifty kinds of tea and to list five kinds of teas as his or her favorites. Here, the evaluators are respectively assigned with numbers 1 to 144, and the fifty kinds of tea are respectively assigned with numbers 1 to 50.

FIG. 21A is a diagram showing the tea numbers listed by the one hundred and four people as indicating their favorite kinds of tea. For example, the leftmost column indicates that Evaluator 1 lists Tea No. 2, No. 5, No. 21, No. 46, and No. 49, as favorites. Likewise, the rightmost column indicates that Evaluator 144 lists Tea No. 6, No. 22, No. 35, No. 41, and No. 44, as favorites.

### (Step 2)

Next, each of the same one hundred and four evaluators is asked to drink a new kind of tea which is currently being produced as a new product and to answer whether he or she likes the new kind of tea. Subsequently, for each of the tea numbers of known kinds of tea listed as favorites in Step S1 by the people who answered that he or she liked the new kind of tea, the numbers of people is counted and a histogram of the numbers is generated.

For example, when Evaluator 1 answers that he or she likes the new kind of tea, 1 is added to each of the frequencies of Tea No. 2, No. 5, No. 21, No. 46, and No. 49. In addition, when Evaluator 2 answers that he or she likes the new kind of tea, 1 is added to each of the frequencies of Tea No. 6, No. 12, No. 33, No. 34, and No. 50.

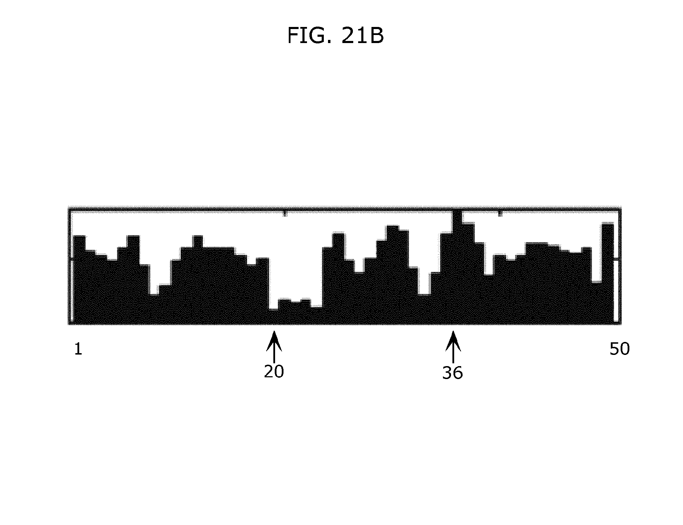

FIG. 21B shows the histogram indicating "the tea numbers of known kinds of tea listed as favorites by the people who like the new kind of tea" generated in the aforementioned manner.

FIG. 21B shows that the new tea is favored by the people who like Tea No. 36, No. 50, etc. FIG. 21B also shows that the new tea is not favored by the people who like Tea No. 20, No. 21, etc.

When considering this focusing on the gene codes, it is considered that the matching network determines the similarity based on the degrees of similarity in the histogram as shown in FIG. 21B.

This is described in detail below.

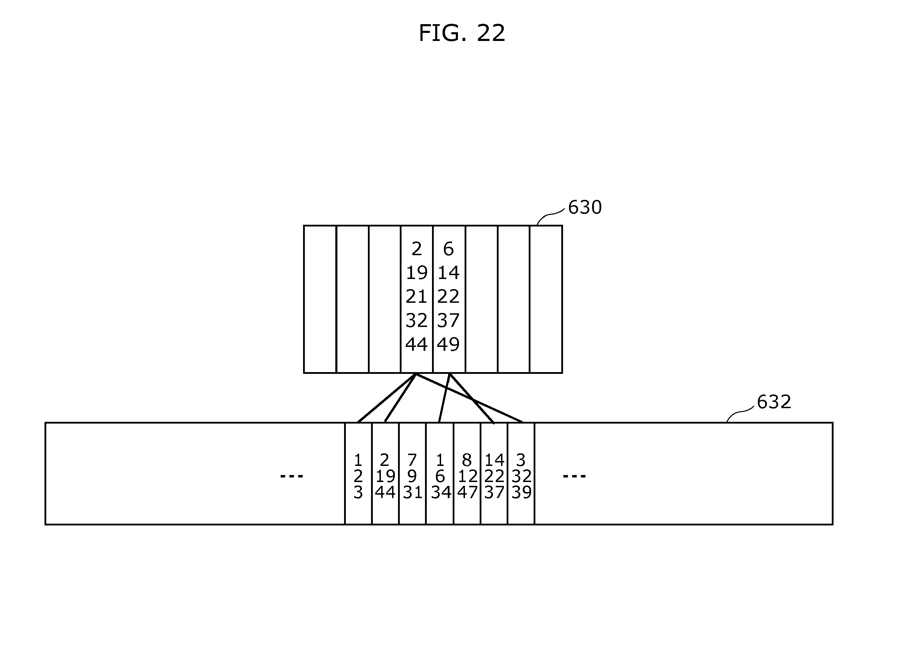

For example, FIG. 22 shows data of favorites of the one hundred and four evaluators shown in FIG. 21A input to the first layer 630 of the matching network. In other words, each of the columns showing neurons included in the first layer 630 includes the tea numbers listed as favorites by the evaluator in the column. Here, the number of columns of the first layer 630 is one hundred and four when the number of the evaluators is one hundred and four. However, for simplification, only a part of the columns is shown here.

In FIG. 22, the first layer 630 and the second layer 632 have connections made based on a matching rule that "a connection is generated between neurons having at least one matching favorite tea number". By generating such a connection between the layers according to the matching rule, it is possible to extract, for example, the kinds of tea which are favored by a larger number of people using the matching network. Hereinafter, the type of connections between the neurons shown in FIG. 22 are referred to as a first connection type.

In addition, it is also possible to apply another rule as a matching rule.

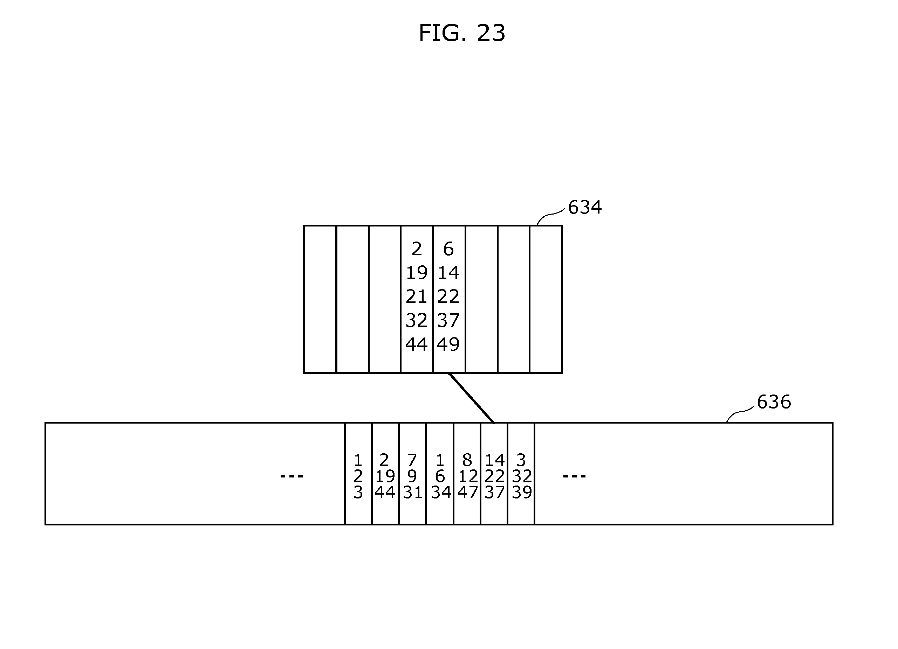

For example, in FIG. 23, the first layer 634 and the second layer 636 have connections generated based on a matching rule that "a connection is made only between neurons having three or more matching tea numbers.". Each of the connections between the layers made according to the matching rule makes it possible to extract which kinds of tea are commonly favored by the individuals in the connection. For example, based on the connections made between the first layer 634 and the second layer 636, it is expected that people who like one of Tea No. 14, No. 22, and No. 37 are tend to like other kinds of tea. Hereinafter, the type of a connection between the neurons shown in FIG. 23 is referred to as a second connection type.

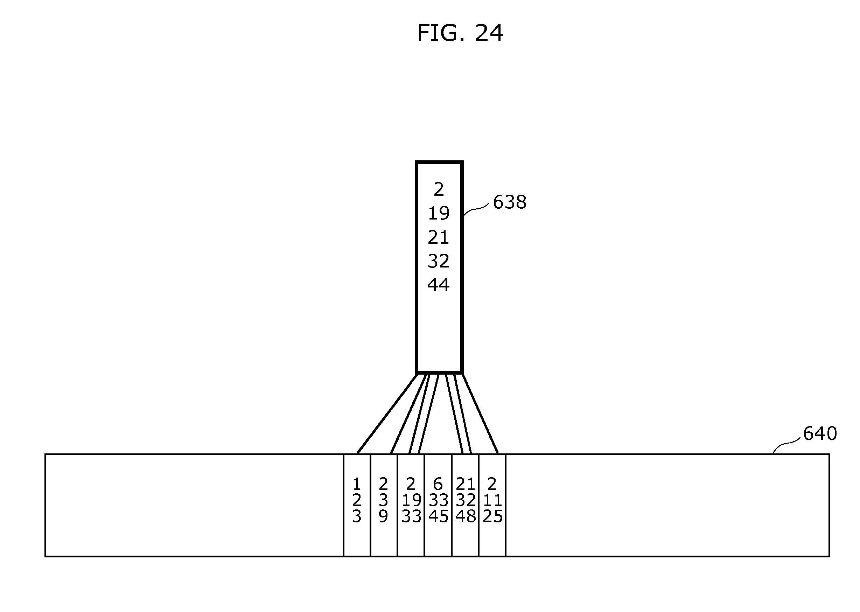

Furthermore, in FIG. 24, the first layer 638 and the second layer 640 have connections made based on a matching rule that "a connection is made between neurons by the number of matching tea numbers". The connection between layers made according to the matching rule has an intermediate property between the earlier-mentioned two matching rules. In other words, a connection is made between tea numbers favored by a large number of people, and a greater number of connections (that is, a connection with a larger weight) are made between tea numbers of tea commonly favored by the people. Hereinafter, the type of connections between the neurons shown in FIG. 24 is referred to as a third connection type.

In addition, it is possible to use different connection types in combination in a single matching network.

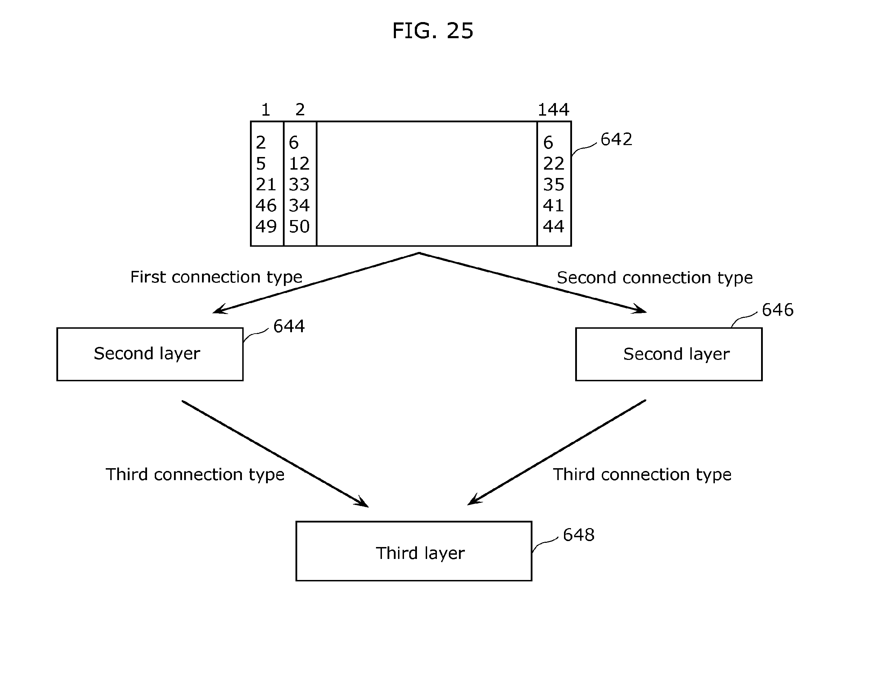

For example, in the matching network shown in FIG. 25, the connection type of the connection between the first layer 642 and the second layer 644 is determined to be the first connection type, and the connection type of the connection between the first layer 642 and the second layer 646 is determined to be the second connection type. Furthermore, the connection types of a connection between the second layer 644 and the third layer 648 and a connection between the second layer 646 and the third layer 648 are determined to be the third connection type.

As a result, in the second layer 644, it is possible to extract the kinds of tea favored by a large number of people among the one hundred and four evaluators. In addition, in the second layer 646, it is possible to extract combinations of kinds of tea commonly favored by a part of people among the one hundred and four evaluators. Subsequently, in the third layer 648, it is possible to extract mixed (blended) tea made from tea of different kinds commonly favored by people who like a given kind of tea and favored by a large number of people.

In other words, each of the first layer neurons may (A) output a signal to the second layer neuron when the number of matching expressed genes included in both the first layer neuron and the second layer neuron is larger than or equal to a predetermined threshold value, or (B) add a larger weight to a signal as the number of matching expressed genes included in both the first layer neuron and the second layer neuron is larger, and output the weighted signal to the second layer neuron.

As described earlier, the matching network has characteristics of being less vulnerable to information loss in the case of transmission between layers, and thus is less vulnerable to decrease in feature extraction performances even when some of the connection types are changed and one or more layers are added.

As described earlier, the matching network is applicable not only as the feature extraction device but also as a device which is capable of sufficiently approximating unknown patterns and detecting combinations of known patterns. Accordingly, the matching network is applicable to data mining for marketing as mentioned earlier.

In addition, the matching network can effectively extract features of both an image similar to a given image and an image dissimilar to the given image. Accordingly, the matching network is applicable to, for example, a scene extraction device which collects similar scenes in a video, a detection device for automatically detecting a suspicious moving object in a video for crime prevention.

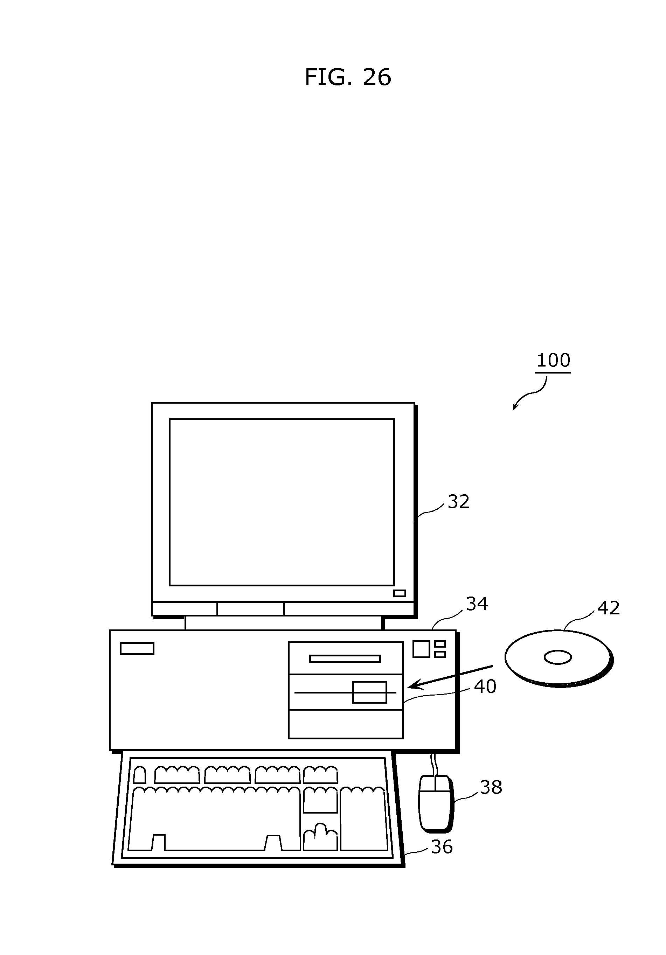

The feature extraction device 100 described in the embodiment can be realized as a computer. With reference to FIG. 26, the feature extraction device 100 includes a computer 34, a keyboard 36 and a mouse 38 for giving instructions to the computer 34, a display 32 for presenting information such as calculation results by the computer 34, a Compact Disc Read Only Memory (CD-ROM) device 40 for reading a program to be executed by the computer 34, and a communication modem (not shown).

The program that is executed by the feature extraction device 100 is stored in the CD-ROM 42 which is a computer-readable medium, and is read by the CD-ROM device 40. Otherwise, the program is read by the communication modem 52 via a computer network.

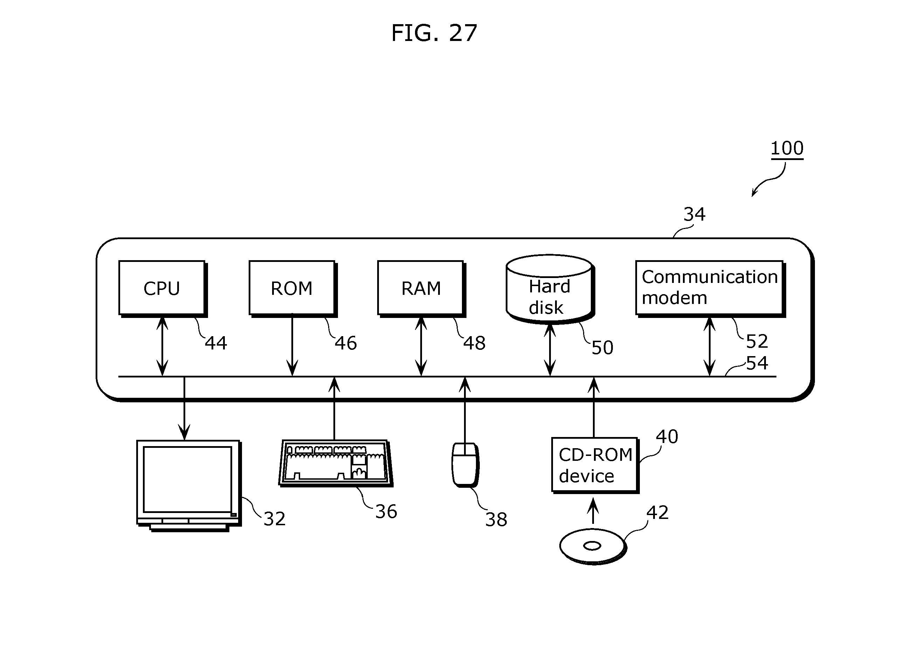

FIG. 27 is a block diagram showing a hardware structure of a computer system which includes the feature extraction device 100. The computer 34 includes a Central Processing Unit (CPU) 44, a Read Only Memory (ROM) 46, a Random Access Memory (RAM) 48, a hard disk 50, a communication modem 52, and a bus 54.

The CPU 44 executes a program read through the CD-ROM device 40 or the communication modem 52. The ROM 46 stores a program and data which are necessary for operations by the computer 34. The RAM 48 stores data such as parameters for use in execution of the program. The hard disk 50 stores programs, data, etc. The communication modem 52 performs communication with other computers via a computer network. The bus 54 mutually connects the CPU 44, the ROM 46, the RAM 48, the hard disk 50, the communication modem 52, the display 32, the keyboard 36, the mouse 38, and the CD-ROM device 40.

A part or all of the structural elements of the feature extraction device 100 may be configured as a single Large Scale Integration (LSI). A system LSI is a super multi-functional LSI manufactured by integrating a plurality of structural units onto a single chip, and is specifically a computer system configured to include a microprocessor, a ROM, a RAM, and so on. A computer program is stored in the RAM. The system LSI achieves its function through the macroprocessor's operations according to the computer processor.

Furthermore, a part or all of the structural elements of the feature extraction device 100 may be configures as a detachable IC card or an individual module. An IC card or a module is a computer system composed of a microprocessor, a ROM, a RAM, and so on. The IC card or module may include the aforementioned super multi-functional LSI. The IC card or module achieves its function through the macroprocessor's operations according to the computer processor. The IC card or module may be configured to be tamper-resistant.

Furthermore, the present invention may be realized as the aforementioned method. Furthermore, the present invention may be realized as the computer program for causing a computer to execute the method and as a digital signal including the computer program.

Furthermore, the present invention may be realized as the computer program or digital signal recorded on a computer-readable recording medium such as a flexible disc, a hard disk, a CD-ROM, an MO, a DVD, a DVD-ROM, a DVD-RAM, a Blu-ray Disc (BD, registered trademark), a USB memory, a memory card such as an SD card. In addition, the present invention may be realized as the digital signal recorded on these recording media.

The present invention may also be implemented as the aforementioned computer program or digital signal transmitted via a telecommunication line, a wireless or wired communication line, a network represented by the Internet, a data broadcast, and so on.

The present invention may also be implemented as a computer system including a microprocessor and a memory, in which the memory stores the computer program and the microprocessor operates according to the computer program.

Furthermore, it is also possible to execute another independent computer system by transmitting the programs or the digital signals recorded on the recording medium or media, or by transmitting the program or digital signal via the aforementioned network and the like.

It is to be noted that the above-described embodiments and variations thereof may be arbitrarily combined.

The embodiments disclosed here should be considered to be examples in all respects and non-limiting. The scope of the present invention is defined by the Claims not by the Description, and all possible modifications having equivalents to those in the Claims and within the scope of the Claims are intended to be included in the present invention.

### [Industrial Applicability]

The present invention is applicable to feature extraction devices, and particularly to feature extraction devices etc. using artificial neural networks.

### [Reference Signs List]

- 32: Display
- 34: Computer
- 36: Keyboard
- 38: Mouse
- 40: CD-ROM device
- 42: CD-ROM
- 44: CPU
- 46: ROM
- 48: RAM
- 50: Hard disk
- 52: Communication modem
- 54: Bus
- 100: Feature extraction device
- 102, 106, 110, 550: Image
- 104, 108, 112: Feature vector
- 201, 202, 203,: 204, 205, 251, 252, 253, 254, 255, 256, 257, 258,
- 259: Neuron
- 301, 302, 303: First layer neuron
- 309, 630, 634, 638, 642: First layer
- 311, 312, 313: Second layer neuron
- 319, 632, 636, 640, 644, 646: Second layer
- 321, 322, 323, 648: Third layer neuron
- 329: Third layer
- 350: Expressed gene assignment unit
- 352, 354: Comparison unit
- 552: Template image
- 554: Target image
- 560: Gene expression matrix
- 562: Connection matrix
- 570, 572, 574, 576: Search result
- 610a, 610b: Segment

## Claims

1. A feature extraction device comprising a neural network, wherein the neural network includes a plurality of neurons which are calculation units,
each of the plurality of neurons includes at least one expressed gene which is an attribute value for determining whether or not transmission of a signal from one of the neurons to an other one of the neurons is possible,
among the plurality of neurons, each of one or more first neurons which has input data obtained by dividing target data to be subjected to feature extraction outputs a first signal value to a second neuron which has the same expressed gene as the expressed gene included in the first neuron, the first signal value increasing as a value of the input data increases, and
the second neuron calculates, as a feature quantity of the target data, a second signal value corresponding to a total sum of the one or more first signal values input to the second neuron.

2. The feature extraction device according to Claim 1,
wherein the neural network is a hierarchical neural network including a plurality of layers,
the hierarchical neural network includes, as the plurality of neurons, a plurality of first layer neurons which are calculation units in a first layer and a second layer neuron which is a calculation unit in a second layer,
each of the first layer neurons and the second layer neuron includes at least one expressed gene which is an attribute value for determining whether or not the transmission of the signal from the first layer neuron to the second layer neuron is possible,
each of the plurality of first layer neurons which has the input data obtained by dividing the target data outputs the first signal value to the second layer neuron which has the same expressed gene as the expressed gene included in the first layer neuron, the first signal value increasing as the value of the input data increases, and
the second layer neuron calculates, as the feature quantity of the target data, the second signal value corresponding to the total sum of the one or more first signal values input to the second layer neuron.

3. The feature extraction device according to Claim 2, further comprising
an expressed gene assignment unit configured, for each of the plurality of first layer neurons and the second layer neuron:
(i) to select at least one gene from a gene repertory including a plurality of genes each indicating a predetermined attribute value; and
(ii) to assign the at least one selected gene as the expressed gene,
wherein each of the plurality of first layer neurons outputs the first signal value to the second layer neuron which has the same expressed gene as the expressed gene included in the first layer neuron.

4. The feature extraction device according to Claim 3,
wherein the expressed gene assignment unit is configured to randomly select the at least one gene that should be assigned as the expressed gene from the gene repertory.

5. The feature extraction device according to Claim 3,
wherein the expressed gene assignment unit is configured to select the at least one gene that should be assigned as the expressed gene from predetermined combinations included in the gene repertory.

6. The feature extraction device according to any one of Claim 2 to Claim 5,
wherein the second layer neuron:
outputs a predetermined value as the second signal value when the total sum of the one or more first signal values input to the second layer neuron is included in a predetermined range; and
outputs, as the second signal value, a value different from the predetermined value when the total sum of the one or more first signal values input to the second layer neuron is not included in the predetermined range.

7. The feature extraction device according to any one of Claim 2 to Claim 5,
wherein the hierarchical neural network includes a plurality of the second layer neurons,
the feature extraction device further comprising
a comparison unit configured to output an activation instruction to each of second layer neurons, among the plurality of second layer neurons, which has a rank within a predetermined range in descending order of total sums of first signal values, each total sum being of first signal values input to a corresponding one of the plurality of second layer neurons,
wherein, among the plurality of second layer neurons, (a) the neuron which has the activation instruction obtained from the comparison unit outputs a predetermined value as the second signal value, and (b) a neuron which does not have the activation instruction obtained from the comparison unit outputs, as the second signal value, a value different from the predetermined value.

8. The feature extraction device according to Claim 1,
wherein each of the plurality of neurons:
(A) outputs the first signal value to the other neuron when the number of expressed genes that match between the neuron and the other one of the neurons is larger than or equal to a predetermined threshold value; and
(B) adds, to the first signal value, a weight that increases as the number of expressed genes that match between the neuron and the other one of the neurons increases, and outputs the weighted first signal value to the other neuron.

9. The feature extraction device according to Claim 2,
wherein the hierarchical neural network further includes, as calculation units in a third layer, a plurality of third layer neurons each including at least one expressed gene,
the hierarchical neural network includes a plurality of the second layer neurons,
each of the plurality of second layer neurons outputs the second signal value to each of third layer neurons, among the plurality of third layer neurons, which has the same expressed gene as the expressed gene included in the second layer neuron when the second signal value corresponding to the total sum of the first signal values is included within the predetermined range, and
each of the plurality of third layer neurons calculates, as a feature quantity of the target data, a third signal value corresponding to a total sum of a corresponding one or more of the plurality of the second signal values input to the third layer neuron.

10. The feature extraction device according to Claim 9, further comprising:
a first comparison unit configured to output an activation instruction to each of second layer neurons, among the plurality of second layer neurons, which has a rank within a predetermined range in descending order of total sums of first signal values, each total sum being of first signal values input to a corresponding one of the plurality of second layer neurons; and
a second comparison unit configured to output an activation instruction to each of third layer neurons, among the plurality of third layer neurons, which has a rank within a predetermined range in descending order of total sums of second signal values, each total sum being of second signal values input to a corresponding one of the plurality of third layer neurons,
wherein, among the plurality of second layer neurons, (a) the second neuron which has the activation instruction obtained from the first comparison unit outputs a predetermined value as the second signal value, and (b) a neuron which does not have the activation instruction obtained from the first comparison unit outputs, as the second signal value, a value different from the predetermined value, and
wherein, among the plurality of third layer neurons, (a) the neuron which has the activation instruction obtained from the second comparison unit outputs a predetermined value as the third signal value, and (b) a neuron which does not have the activation instruction obtained from the second comparison unit outputs, as the third signal value, a value different from the predetermined value.

11. The feature extraction device according to Claim 9, further comprising:
an expressed gene assignment unit configured, for each of the plurality of first layer neurons, the plurality of second layer neurons, and the plurality of third neurons:
(i) to select at least one gene from a gene repertory including a plurality of genes each indicating a predetermined attribute value; and
(ii) to assign each of the at least one selected gene as the expressed gene;
a first comparison unit configured to output an activation instruction to each of second layer neurons, among the plurality of second layer neurons, which has a rank higher than or equal to a predetermined threshold value, the rank being based on a total sum of the first signal values input to the second layer neuron; and
a second comparison unit configured to output an activation instruction to each of third layer neurons, among the plurality of third layer neurons, which has a rank higher than or equal to a predetermined threshold value, the rank being based on a total sum of the second signal values input to the third layer neuron,
wherein each of the plurality of first layer neurons:
obtains a value of the input data obtained by dividing the target data by the number of first layer neurons; and
outputs, as the first signal value, the value of the input data to the second layer neuron which has the same expressed gene as the expressed gene included in the first layer neuron,
each of the plurality of second layer neurons:
outputs 1 as the second signal value when the second layer neuron has the activation instruction obtained from the first comparison unit; and
outputs 0 as the second signal value when the second layer neuron does not have the activation instruction obtained from the first comparison unit, and
each of the plurality of third layer neurons:
outputs 1 as the third signal value when the third layer neuron has the activation instruction obtained from the second comparison unit; and
outputs 0 as the third signal value when the third layer neuron does not have the activation instruction obtained from the second comparison unit.

12. The feature extraction device according to Claim 9, , further comprising:
an expressed gene assignment unit configured, for each of the plurality of first layer neurons, the plurality of second layer neurons, and the plurality of third layer neurons:
(i) to randomly select at least one gene from a gene repertory including a plurality of genes each indicating a predetermined attribute value; and
(ii) to assign each of the at least one selected gene as the expressed gene;
a first comparison unit configured:
to obtain, for each of the plurality of second layer neurons, a rank based on a total sum of the first signal values input to the second layer neuron; and
to output an activation instruction to each of one or more second layer neurons, among the plurality of second layer neurons, which has a rank lower than or equal to a rank predetermined as a threshold value;
a second comparison unit configured:
to obtain, for each of the plurality of third layer neurons, a rank based on a total sum of a corresponding one or more of the second signal values input to the third layer neuron; and
to output an activation instruction to each of one or more third layer neurons, among the plurality of third layer neurons, which has a rank lower than or equal to a predetermined threshold value,
wherein each of the plurality of first layer neurons:
obtains a value of the input data obtained by dividing the target data according to the number of first layer neurons; and
outputs, as the first signal value, the value of the input data to the second layer neuron which has the same expressed gene as the expressed gene included in the first layer neuron,
each of the plurality of second layer neurons:
outputs 1 as the second signal value when the second layer neuron has the activation instruction obtained from the first comparison unit; and
outputs 0 as the second signal value when the second layer neuron does not have the activation instruction obtained from the first comparison unit, and
each of the plurality of third layer neurons:
outputs 1 as the third signal value when the third layer neuron has the activation instruction obtained from the second comparison unit; and
outputs 0 as the third signal value when the third layer neuron does not have the activation instruction obtained from the second comparison unit.

13. A feature extraction method using a neural network, wherein the neural network includes a plurality of neurons which are calculation units,
each of the plurality of neurons includes at least one expressed gene which is an attribute value for determining whether or not transmission of a signal from one of the neurons to an other one of the neurons is possible,
the feature extraction method comprising:
outputting a first signal value to a second neuron which has the same expressed gene as the expressed gene included in the first neuron, the first signal values increasing as values of the input data increase, the outputting being performed by each of one or more first neurons which is included in the plurality of neurons and has input data obtained by dividing target data to be subjected to feature extraction; and
calculating, as a feature quantity of the target data, a second signal value corresponding to a total sum of the one or more first signal values input to the second neuron, the calculating being performed by the second neuron.

14. A program causing a computer to execute the feature extraction method according to Claim 13.

15. The feature extraction device according to Claim 1,
wherein the expressed gene comprises a plurality of the expressed genes,
the feature extraction device:
determines a frequency of the at least one expressed gene included in each of a plurality of the second neurons, the frequency increasing with increase in the number of or magnitudes of the first signal values input to the second neuron; and
outputs gene codes as feature quantities of the target data, the gene codes being information indicating a distribution of sums of frequencies of the expressed genes, each sum being a sum of one or more frequencies of a corresponding one of the expressed genes included in one or more of the plurality of second neurons.
